(19) Europäisches Patentamt
European Patent Office
Office européen des brevets

(11) **EP 2 457 070 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **10734500.1**

(22) Anmeldetag: **23.07.2010**

(51) Int Cl.:
*G01G 3/18* (2006.01)      *G01G 7/04* (2006.01)
*G01G 23/01* (2006.01)

(86) Internationale Anmeldenummer:
**PCT/EP2010/060758**

(87) Internationale Veröffentlichungsnummer:
**WO 2011/009957 (27.01.2011 Gazette 2011/04)**

(54) **VERFAHREN ZUR TEMPERATURKORREKTUR EINER KRAFTMESSVORRICHTUNG UND KRAFTMESSVORRICHTUNG**

Method  for correcting temperature errors in a force measuring device and corresponding device

Procédé de correction des errors de température d'un dispositif de mesure de force et dispositif de mesure de force correspondant

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009   EP 09166245**

(43) Veröffentlichungstag der Anmeldung:
**30.05.2012   Patentblatt 2012/22**

(73) Patentinhaber: **Mettler-Toledo GmbH**
**8606 Greifensee (CH)**

(72) Erfinder:
- **KÖPPEL, Thomas**
  **CH-8610 Oetwil am See (CH)**
- **REBER, Daniel**
  **CH-8322 Madetswil (CH)**

(74) Vertreter: **Mettler-Toledo**
**IP Department**
**Im Langacher 44**
**8606 Greifensee (CH)**

(56) Entgegenhaltungen:
DE-B3- 10 353 414      DE-U1- 29 803 425
GB-A- 2 149 512

**Beschreibung**

Die vorliegende Erfindung betrifft ein Verfahren zur Temperaturkorrektur einer Kraftmessvorrichtung, insbesondere einer Waage, und eine entsprechende Kraftmessvorrichtung.

Im Allgemeinen umfasst eine Kraftmessvorrichtung verschiedene Bauteile wie eine Kraftaufnahme, eine Kraftübertragung, eine Kraftmesszelle und gegebenenfalls eine Vorrichtung zur Verarbeitung von Messsignalen. Eine zu messende Kraft wird mittels der Kraftaufnahme aufgenommen und über die Kraftübertragung an die Kraftmesszelle weitergeleitet. Die Kraftmesszelle formt die zugeführte Kraft in ein elektrisches Kraftmesssignal um, welches zur der auf die Kraftmessvorrichtung einwirkenden Kraft korrespondiert.

In entsprechender Weise ergibt sich bei einer Waage die einwirkende Kraft durch die Gewichtskraft des Wägeguts, die sogenannte Last, welche auf die Kraftaufnahme in Form einer Waagschale wirkt. Diese Kraftwirkung wird über die Kraftübertragung in Form eines Gestänges auf die Kraftmesszelle oder Wägezelle weiterleitet und dort in ein elektrisches Kraftmesssignal, das sogenannte Wägesignal, umgewandelt.

Das elektrische Kraftmesssignal wird an eine Signalverarbeitungseinheit weitergeleitet, welche der weiteren Verarbeitung dieses Kraftmesssignals und der Erzeugung eines entsprechenden Ausgangssignals dient. Das Ausgangssignal wird an eine Anzeigeeinheit und/oder an eine weitere Verarbeitungsvorrichtung, zum Beispiel an einen Leitrechner oder an eine Anlagensteuerung, übertragen.

Diese Kraftmessvorrichtungen oder Waagen finden typischerweise ihren Einsatz beim Verwiegen einzelner Wägegüter aber auch in automatisierten Produktions- und Testanlagen zum Verwiegen grösserer Mengen von Wägegütern. Die Anforderungen an eine solche Kraftmessvorrichtung bestehen in einer hohen Messgenauigkeit, einer hohen Reproduzierbarkeit und Stabilität der Messungen. Ausserdem soll die Kraftmessvorrichtung möglichst einfach und kostengünstig aufgebaut sein.

Es ist bekannt, dass für genaue und stabile Messungen störende, das Messresultat verfälschende Einflüsse gemessen und auf geeignete Weise korrigiert werden müssen. Beispielsweise beschreibt GB 1495278 ein Verfahren, bei dem die Einflüsse lastunabhängiger Parameter, insbesondere der Einfluss einer Temperatur korrigiert wird, welche von aussen auf die Wägevorrichtung einwirkt. Dazu wird mittels eines Temperatursensors die einwirkende Umgebungstemperatur gemessen und ein dazu entsprechendes elektrisches Temperaturmesssignal erzeugt. Anhand dieses Temperaturmesssignals wird dann das Kraftmesssignal zu einem temperaturkorrigierten Ausgabesignal verarbeitet. Mit dieser Methode können auch zeitabhängige Phänomene korrigiert werden, beispielsweise das Kriechen mittels einer zeitabhängigen Exponentialfunktion.

Dieser bekannten Korrekturmethode liegt ein Zustand zugrunde, bei welchem die Bauteile der Kraftmessvorrichtung gleiche Temperaturen aufweisen, nämlich die der Umgebungstemperatur. Oftmals treten jedoch Situationen auf, bei denen verschiedene Bauteile der Kraftmessvorrichtung unterschiedliche Temperaturen aufweisen. Zum Beispiel kann bei einer Kraftmessvorrichtung während des Betriebs eine zusätzliche Wärme erzeugt werden, welche zu einer erhöhten Temperatur bei einigen Bauteilen der Kraftmessvorrichtung führt. Zwischen diesen betriebsbedingten Temperaturen und der einwirkenden Umgebungstemperatur ergibt sich somit eine Temperaturdifferenz.

Im Allgemeinen beeinflussen solche Temperaturdifferenzen die Messungen der Kraftmessvorrichtung, also die Messungen der einwirkenden Kraft oder Last. Daher wird angestrebt, den Einfluss dieser Temperaturdifferenzen möglichst vollständig zu korrigieren, insbesondere bei hohen Anforderungen an die Genauigkeit und die Stabilität der Kraftmessvorrichtung.

Aus dem Stand der Technik sind verschiedene Massnahmen bekannt, um die Auswirkungen von Temperaturdifferenzen zu korrigieren. Beispielsweise offenbart die DE10353414B3 eine Waage mit mindestens zwei Temperaturfühlern, die an verschiedenen Stellen angeordnet sind, wobei ein Anfangskorrekturwert in Abhängigkeit von der Differenz der Ausgangssignale dieser beiden Temperaturfühler unmittelbar nach dem Einschalten der Spannungsversorgung gewählt ist. Diese beiden Temperaturfühler, beziehungsweise die von ihnen erfasste Temperaturdifferenz dienen der indirekten Bestimmung der dem Einschalten vorangegangenen Ausschaltdauer. Über Rechenmittel wird das vom Wägesystem erzeugte gewichtsabhängige Signal in Abhängigkeit von der Zeitdauer seit dem Einschalten korrigiert. Dadurch kann die Zeit vom Einschalten der Spannungsversorgung bis zum Erreichen der vollen Genauigkeit der Waage drastisch reduziert werden. Diese Schrift betrifft demnach das Einschaltverhalten der Waage

Die GB 2148512A betrifft eine elektronische Waage mit Messfühlern, die das Messergebnis beeinflussende Störfaktoren erfassen. Beispielsweise ist einer der Messfühler ein Temperaturfühler, der an der Kraftkompensationsspule befestigt ist, um die durch die Verlustleistung der Kompensationsspule bewirkte Temperaturänderung zu erfassen und das Auswertesignal des Messwertaufnehmers der Waage anhand dieser gemessenen Temperaturänderung zu korrigieren. Die Daten des Temperaturmessfühlers werden einem Speicherbereich der digitalen Signalverarbeitungseinheit fortlaufend zugeführt und für eine vorgesehene Zeit gespeichert. Aus verschiedenen Zeiten stammende Daten werden entsprechend der Trägheit des Messfühlers verschieden gewichtet, wenn sie zur Korrektur des Auswertesignals des Messwertaufnehmers der Waage herangezogen werden. Es wird folglich eine phänomenologische Korrektur durchgeführt.

Die DE29803425U1 betrifft eine Waage mit einer Einrichtung zur Temperaturkompensation des Nullpunktsignals, wobei zuerst die Änderungsgeschwindigkeit dT/dt der Temperatur bestimmt wird, bei hinreichend kleiner Änderung das momentane Nullpunktssignal zusammen mit dem momentanen Temperatursignal abgespeichert wird und aus einer genügend hohen Menge an Wertepaaren wird dann der Temperaturkoeffizient des Nullpunkts berechnet und zur Nullpunktskorrektur - der Korrektur ohne Last - des Wägesignals herangezogen wird.

Die CH 658516 beschreibt eine Waage, welche auf dem Prinzip der elektromagnetischen Kraftkompensation basiert. Dabei wird die Kompensationskraft unter Abgabe von Wärme mittels einer stromdurchflossenen Spule erzeugt, welche in einem Luftspalt eines Permanentmagneten angeordnet ist. Somit ergibt sich in der Spule eine höhere Temperatur als bei jenen Bauteilen, welche weiter entfernt von der Spule angeordnet sind und deren Temperatur im Wesentlichen durch die von aussen einwirkende Temperatur bestimmt ist. Zur Kompensation dieser Temperaturdifferenz wird ein Temperatursensor im Inneren des Permanentmagneten angeordnet und damit eine Temperatur gemessen, welche zur Temperatur des erwärmten Permanentmagneten korrespondiert. Anhand dieser gemessenen Temperatur wird dann das Kraftmesssignal korrigiert. Allerdings kann der Temperatursensor aufgrund der Wärmeträgheit des Permanentmagneten nur langsam auf Änderungen der Umgebungstemperatur reagieren. Somit ergeben sich trotz der Kompensation Fehlereinflüsse welche das Messresultat verfälschen können. Zudem ist die Installation, Justierung und Kontrolle des Temperatursensors im Permanentmagnet aufwändig und fehleranfällig. Diese Nachteile ergeben sich durch die Anordnung des Temperatursensors bei oder in einem kritisches Bauteil, welches im direkten Zusammenhang mir der eigentlichen Kraftmessung steht.

Zur direktren Erfassung der Wärmeabgabe wird in CH 669041 vorgeschlagen, den Temperatursensor innerhalb der Wicklung der Spule anzuordnen. Dadurch kann die Temperatur im Zentrum der Wärmequelle, nämlich innerhalb der Wicklung der Spule, erfasst werden. Allerdings ist auch in diesem Fall die Installation und Justierung des Temperatursensors problematisch. Ferner ist der Messwert möglicherweise nicht repräsentativ für die Korrektur der Temperaturabhängigkeit des Magnetfelds, da diese primär mit der Temperatur des Permanentmagneten und nur sekundär mit der Spulentemperatur zusammenhängt.

Der vorliegenden Erfindung liegt daher die Aufgabe zugrunde, ein verbessertes Verfahren zur Temperaturkorrektur bei einer Kraftmessvorrichtung, insbesondere einer Waage, anzugeben, mit welchem ein einfacher und kostengünstiger Betrieb erreicht werden kann bei gleichzeitiger Erfüllung von hohen Anforderungen bezüglich Messgenauigkeit und Stabilität. Insbesondere soll ein Verfahren zur Kompensation einer Temperaturdifferenz angegeben werden, bei welchem der Temperatursensor auf einfache Weise installiert, justiert und kontrolliert werden kann. Ausserdem soll eine entsprechende Kraftmessvorrichtung mit einem einfachen, kostengünstigen und zuverlässigem Aufbau angegeben werden.

Diese Aufgabe wird mit einem Verfahren und mit einer Kraftmessvorrichtung gelöst, welche die in den unabhängigen Ansprüchen angegebenen Merkmale aufweist.

Vorteilhafte Ausgestaltungen der Erfindung sind in den weiteren, abhängigen Ansprüchen angegeben.

Grundsätzlich gelten die nachfolgenden Betrachtungen für den normalen Betrieb einer Waage. Einschaltvorgänge und Fehlfunktionen seien hierin nicht berücksichtigt.

Die Erfindung betrifft ein Verfahren zur Temperaturkorrektur einer Kraftmessvorrichtung, insbesondere einer Waage, in deren normalem Betrieb welches die Schritte aufweist: Erzeugung eines elektrischen, zur einwirkenden Kraft korrespondierenden Kraftmesssignals mittels einer Kraftmesszelle; Messung einer Temperatur mittels eines in Distanz von den wärmeerzeugenden Bauteilen der Kraftmessvorrichtung angeordneten Temperatursensors, welche Temperatur hauptsächlich zu einer auf die Kraftmessvorrichtung einwirkenden Umgebungstemperatur korrespondiert und Erzeugung eines der gemessenen Temperatur entsprechenden elektrischen Temperaturmesssignals; Verarbeitung des Kraftmesssignals anhand des Temperaturmesssignals und des Kraftmesssignals zu einem temperaturkorrigierten Ausgabesignal; Übertragung des Ausgabesignals an eine Anzeigeeinheit und/oder an eine weitere Verarbeitungseinheit. Dabei wird bei dem Schritt der Verarbeitung aus dem Kraftmesssignal und dem Temperaturmesssignal, mindestens ein der Korrektur des Ausgabesignals dienender Korrekturparameter mittels eines zugrunde liegenden thermodynamischen Modells berechnet, welcher eine Temperaturdifferenz charakterisiert, die zwischen einer Systemtemperatur und der gemessen Temperatur und/oder zwischen einer ersten Systemtemperatur und einer zweiten Systemtemperatur besteht.

Dadurch kann eine einfache, effiziente und präzise Temperaturkompensation durchgeführt werden, ohne dass es dazu einer aufwändigen und/oder fehleranfälligen Installation eines Temperatursensors bei oder in kritischen Bauteilen der Kraftmessvorrichtung bedarf. Auch ist die Installation weiterer Temperatursensoren an verschiedenen Stellen der Kraftmessvorrichtung nicht notwendig. Somit kann ein einfacher und kostengünstiger Aufbau der Kraftmessvorrichtung erreicht werden. Ferner ergeben sich Vorteile bezüglich Kosten, Zuverlässigkeit und Stabilität der Kraftmessvorrichtung, da die Berechnungen mit einfachen Mitteln in nachvollziehbaren Schritten durchgeführt werden können.

Erfindungsgemäss wird also gegenüber dem Stand der Technik ein zusätzlicher thermischer Einfluss, welcher die Kraftmessungen wesentlich beeinflusst, über ein thermodynamisches beziehungsweise physikalisches Modell berechnet. Dieser berechnete Einfluss wird dann zur zusätzlichen Korrektur des Kraftmesssignals verwendet.

Der Temperatursensor ist an einer solchen Stelle in der Kraftmessvorrichtung positioniert, dass er hauptsächlich die Umgebungstemperatur misst. Temperaturen die an beziehungsweise in der Nähe wärmeerzeugender Bauteile auftreten, können vermittels des thermodynamischen beziehungsweise physikalischen Modells berechnet werden. Unter der Umgebungstemperatur ist eine Temperatur zu verstehen, welche verschiedene Temperatureinflüsse der Umgebung umfasst, die auf die Kraftmessvorrichtung einwirken, zum Beispiel die Temperatur der Atmosphäre, welche die Kraftmessvorrichtung umgibt oder welche sich im Innraum eines Gehäuses der Kraftmessvorrichtung befindet, sowie die Temperatur der Aufstellfläche oder des Tisches oder die Temperatur des Messguts.

Die Umgebungstemperatur wirkt stets auf die Kraftmessvorrichtung und auf einen Temperatursensor, der an oder in der Kraftmessvorrichtung angeordnet ist. Stellenweise kann jedoch die gemessene Temperatur von der Umgebungstemperatur abweichen, beispielsweise wenn weitere Temperatureinflüsse, welche mit dem Betrieb der Kraftmessvorrichtung zusammenhängen, zum Tragen kommen.

Als Systemtemperatur wird jene Temperatur bezeichnet, welche einer Systemkomponente der Kraftmessvorrichtung zugeordnet werden kann, zum Beispiel die Temperatur eines Bauteils oder eines Teils eines Bauteils oder einer Gruppe von Bauteilen wie Spule, Permanentmagnet, Kern des Permanentmagneten, Luftspalt, Hebel, Positionsgeber oder dessen Kopplung sowie Kraftaufnahme, Kraftzuführung oder Kraftmesszelle.

Der Temperatursensor wird nun derart angeordnet, dass die gemessene Temperatur und damit das erzeugte elektrische Temperaturmesssignal hauptsächlich zu der Umgebungstemperatur korrespondiert. Zum Beispiel kann der Sensor entweder direkt mit der umgebenden Atmosphäre oder mit jenen Bauteilen in thermischem Kontakt stehen, deren Systemtemperatur hauptsächlich durch die Umgebungstemperatur bestimmt ist. Weniger geeignet ist eine Anordnung des Temperatursensors an oder in der Nähe von Bauteilen, deren Temperatur im Wesentlichen durch betriebsbedingte Vorgänge der Kraftmessvorrichtung bestimmt ist. Vorzugsweise wird also der Temperatursensor an oder in der Nähe von thermisch passiven oder feststehenden Bauteilen der Kraftmesszelle angeordnet. Er kann aber auch bei zur Umgebung exponierten oder äusseren Bauteilen der Kraftmessvorrichtung wie an deren Gehäuse oder an beweglichen Teilen wie an der Kraftaufnahme oder der Kraftzuführung angebracht werden. Ferner könnte der Temperatursensor auch ausserhalb des Gehäuses oder in der Umgebung der Kraftmessvorrichtung angeordnet werden.

Durch diese Anordnung ergibt sich der Vorteil, dass der Temperatursensor unmittelbar und schnell auf Änderungen der Umgebungstemperatur reagieren kann. Ausserdem ist die Messung der Umgebungstemperatur weitgehend unabhängig von der Kraftmessung und dementsprechend von deren Einflüssen, wie der Wärmeerzeugung, entkoppelt. Besonders vorteilhaft ist, dass der Temperatursensor an nahezu beliebigen, unkritischen Orten und Bauteilen der Kraftmessvorrichtung angeordnet werden kann, sodass die Installation, Justierung und/oder Kontrolle des Temperatursensors problemlos vorgenommen werden kann.

Grundsätzlich kann das erfindungsgemässe Verfahren für beliebige Korrekturen von Temperaturdifferenzen bei Kraftmessvorrichtungen eingesetzt werden. So kann eine Temperaturdifferenz korrigiert werden, welche sich aus einer, beispielsweise sprunghaft, erzeugten Wärme ergibt. Es können aber auch Temperaturdifferenzen korrigiert werden, welche sich allgemein aus der Differenz zwischen der Umgebungstemperatur und einer Systemtemperatur oder zwischen zwei Systemtemperaturen ergeben. Der Korrekturparameter CP kann somit verschiedene Temperaturdifferenzen charakterisieren.

Situationen mit verschiedenen Systemtemperaturen können entstehen, wenn sich die einwirkende Umgebungstemperatur relativ schnell ändert und die Systemtemperaturen aufgrund der Wärmeträgheit der Bauteile diesen Änderungen nicht oder zumindest nicht unmittelbar folgen können. Die resultierende Temperaturdifferenz basiert somit auf einer kurzfristigen oder sprunghaften Änderung und tritt daher nur während einer gewissen Zeitdauer in Erscheinung, während die Systemtemperatur eines Bauteils mit einer zeitlichen Verzögerung hinter dem Sprung der Umgebungstemperatur zurückliegt. In der Regel gleichen sich jedoch diese Temperaturdifferenzen mit der Zeit weitgehend aus, bis entsprechend einer gewissen Reaktionsgeschwindigkeit ein neuer Gleichgewichtszustand erreicht wird.

Die Reaktionsgeschwindigkeit und damit die Ausbildung einer zeitabhängigen Temperaturdifferenz hängt von der thermischen Charakteristik der Bauteile selbst und/oder deren Anbindung an andere Bauteile und/oder an die Umgebung ab. Dabei kann diese Charakteristik mit vielfältigen thermodynamischen Faktoren in Verbindung stehen, beispielsweise mit der Wärmeträgheit, Wärmezufuhr, Wärmeleitung und Wärmeabgabe sowie mit der Masse oder der Oberfläche der Bauteile wie auch mit der thermischen Temperaturausdehnung.

Besonders vorteilhaft bei der erfindungsgemässen Korrektur ist, dass grundsätzlich keine örtliche Beschränkung besteht, da die Systemtemperatur an beliebigen Orten und/oder Bauteilen der Kraftmessvorrichtung berechnet werden kann. Somit existieren keine lokal beschränkten Messbereiche wie bei Temperatursensoren, deren Messwert möglicherweise nicht repräsentativ für das zu messende Bauteil ist.

Die Systemtemperatur kann ohne Mehraufwand für verschiedene Orte und/oder Bauteile bestimmt werden, ohne dass eine Vielzahl von Sensoren installiert werden muss. Somit können auch sehr komplexe Formen von Temperaturverteilungen in der Kraftmessvorrichtung auf kostengünstige Weise bestimmt und zur Korrektur herangezogen werden. Insbesondere kann anhand einer einzigen an unproblematischer Stelle erfolgten Temperaturmessung die Temperaturdifferenz zwischen zwei verschiedenen Bauteilen der Kraftübertragung berechnet werden und daraus deren Einfluss auf die Ermittlung des Kraftmesssignals.

Ferner entfallen thermische Fehleinflüsse, welche aufgrund einer thermischen Anbindung des Temperatursensors entstehen. Zum Beispiel ergibt sich in der Regel durch das Ankleben eines Temperatursensors an einem Bauteil eine wärmeisolierende Zwischenschicht, die oft zu Verfälschungen und/oder Verzögerungen bei der zu messenden Systemtemperatur führen. Solche Probleme sind bei der Berechnung der Systemtemperatur nicht vorhanden.

Des Weiteren können komplexe und vielfältige Temperatureinflüsse effizient berechnet und zur Korrektur des Kraftmesssignals herangezogen werden, indem die Berechnungen den Genauigkeitsanforderungen entsprechend verfeinert werden.

Unter dem Begriff der Signalverarbeitungseinheit werden alle signalverarbeitenden Elemente verstanden, welche geeignet sind die Messsignale der Kraftmesszelle und des Temperatursensors zu verarbeiten, beispielsweise analoge oder digitale Schaltkreise, integrierte Schaltkreise, Schieberegister, Prozessoren, Computer und dergleichen.

In einer ersten vorteilhaften Ausgestaltung der Erfindung wird der Korrekturparameter mittels einer Antwortfunktion und eines Faltungsintegrals berechnet. Dadurch können thermodynamische Phänomene, welche zu entsprechenden Temperaturdifferenzen führen, in kompakter Form berechnet und zur Korrektur herangezogen werden. Vorzugsweise wird der Korrekturparameter berechnet, indem das Temperaturmesssignal, das Kraftmesssignal oder eine aus dem Kraftmesssignal ermittelte Verlustleistung mit der zeitlichen Ableitung der Antwortfunktion gefaltet wird. Dadurch kann das gemessene Signal, insbesondere dessen zeitlich zurückliegender Verlauf, bei der Berechnung des Korrekturparameters berücksichtigt werden. Die einzelnen Schritte dieser Berechnung sind in der Detailbeschreibung angegeben.

Als Antwortfunktion können grundsätzlich eine Vielzahl von zeitabhängigen Funktionen verwendet werden, beispielsweise Exponentialfunktionen oder Polynome. Bevorzugt wird die Antwortfunktion gemäss mindestens einer thermodynamischen Gesetzmässigkeit und/oder als thermodynamische Reaktion einer eingehenden Schrittfunktion oder Impulsfunktion und/oder als eine zeitlich abfallende Funktion, insbesondere als eine Exponentialfunktion mit einer vorgegebenen Zeitkonstante, definiert. Dadurch können vielfältige thermodynamische Vorgänge wie Wärmeleitung Wärmeausdehnung oder die thermische Abschwächung eines Magnetfeldes abgebildet und zur Berechnung des Korrekturparameters verwendet werden. Ferner kann die Berechnung problemlos den konkreten Gegebenheiten angepasst werden, beispielsweise durch Anpassung der Zeitkonstanten an die Wärmeleitfähigkeit der verschiedenen Materialien.

In einer bevorzugten Ausgestaltung der Erfindung wird der Korrekturparameter durch ein rekursives Berechnungsverfahren berechnet. Das ermöglicht die Berechnung komplizierter Formeln, insbesondere die Berechnung des Faltungsintegrals, mittels einfacher mathematischer Operationen, beispielsweise mittels einfacher Multiplikationen, Summationen und Verzögerungen. Zudem ermöglicht dieses Verfahren eine starke Reduktion der Speicherung von Zahlenwerten und Zwischenresultaten. Des Weiteren wird eine weitgehend verzögerungsfreie Signalverarbeitung oder eine Echtzeitverarbeitung erreicht.

Vorzugsweise wird der Korrekturparameter als zeitabhängige Grösse berechnet, welche vom zeitlichen Verlauf, insbesondere vor der zeitlichen Änderung, der gemessenen Temperatur und/oder des Kraftmesssignals abhängt. Durch die Korrektur dieser Phänomene werden primär Temperaturdifferenzen erfasst, die kurzfristig und/oder vorübergehend in Erscheinung treten. Somit kann eine sogenannte dynamische Temperaturkorrektur vorgenommen und damit eine hohe Messgenauigkeit auch bei kurzfristigen Temperaturänderungen erreicht werden.

Besonders vorteilhaft ist die Möglichkeit der unmittelbaren Berücksichtigung der Zeitabhängigkeit durch die Berechnung. Diese verzögerungsfreie Korrektur von Temperaturdifferenzen ist vorteilhaft gegenüber Temperaturmessungen, bei welchen mit Verfälschungen durch den Temperatursensors selbst zu rechnen ist, bedingt durch dessen thermische Charakteristik, insbesondere dessen thermische Trägheit.

In einer weiteren Ausgestaltung entspricht die Systemtemperatur einer Temperatur eines Bauteils der Kraftmessvorrichtung, insbesondere einer Kraftzuführung, einer Kraftübertragung, eines Hebels oder eines Hebelarms und das Ausgabesignal wird in Abhängigkeit von der Temperaturausdehnung dieses Bauteils korrigiert. Dadurch kann eine Temperaturdifferenz, welche über Änderungen der Bauteildimensionen zu einem Fehlereinfluss auf die Kraftmessung führt, wirkungsvoll korrigiert werden.

Grundsätzlich bewirkt eine Temperaturänderung eine Änderung der Bauteildimensionen aller betroffenen Bauteile. Dabei ändern sich jedoch die Dimensionen der betroffenen Bauteile normalerweise nicht mit der gleichen Geschwindigkeit, sondern deren Temperaturausdehnung hängt von den individuellen Charakteristiken der Bauteile ab. Das führt bei diesen Bauteilen und/oder Teilen davon zu einer Änderung der Kraftübertragung beziehungsweise zu einer Verschiebung des Gleichgewichts. Somit ergibt sich ein Fehlereinfluss auf die Kraftmessung, welcher jedoch durch das erfindungsgemässe Verfahren wirkungsvoll korrigiert werden kann.

Vorzugsweise ist das Bauteil ein Hebel oder ein Hebelarm, welcher der Kraftübertragung der einwirkenden Kraft auf die Kraftzelle dient. Somit korrespondiert der Korrekturparameter zu einer Längenausdehnung des Hebels beziehungsweise der Hebelarme. Dadurch können die Einflüsse der Umgebungstemperatur, wie in der Detailbeschreibung dargelegt, mit einem einfachen thermodynamischen Modell berechnet werden.

In einem weiteren erfindungsgemässen Ausführungsbeispiel charakterisiert der Korrekturparameter mindestens zwei der Temperaturdifferenzen, welche jeweils verschiedenen Bauteilen der Kraftmessvorrichtung, insbesondere zwei entgegenwirkenden Hebelarmen zugeordnet sind. Solche Temperaturdifferenzen treten in Erscheinung, wenn verschiedene Bauteile mit unterschiedlichen thermischen Charakteristiken auf eine kurzfristige oder sprunghafte Temperaturänderung der Umgebungstemperatur reagieren. In diesem Fall ist das erfindungsgemässe Verfahren besonders vorteilhaft, da auf eine aufwändige Verarbeitung mehrerer Temperaturmesssignale und eine entsprechend schwierige Justierungen verzichtet werden kann. Zudem entfällt die Installation von mehreren Temperatursensoren, sodass sich ein kostengünstiger Aufbau ergibt.

Besonders vorteilhaft ist, dass das erfindungsgemässe Verfahren auch bei komplexen Aufbauten mit vielfältigen Bauteilen Anwendung finden kann. Mit dem erfindungsgemässen Korrekturparameter können mehrere Temperaturdifferenzen charakterisiert werden und zur Korrektur herangezogen werden.

Insbesondere kann der Korrekturparameter eine Gruppe von zwei Werten umfassen, welche eine erste Temperaturdifferenz eines ersten Hebelarms und eine zweite Temperaturdifferenz eines zweiten Hebelarms aufweist. Dadurch kann das komplexe Verhalten mehrerer überlagerter zeitlicher Vorgänge, nämlich die unterschiedlichen zeitlichen Verläufe der beiden Hebelarme, berechnet werden.

In einer weiteren erfindungsgemässen Ausführung wird der Korrekturparameter mittels eines Differenzsignals berechnet, welches sich aus der Differenz zwischen zwei Temperaturdifferenzen ergibt. Bei dieser Differenzbildung entfällt die Abhängigkeit von einer weiteren Referenztemperatur, insbesondere der einwirkenden Umgebungstemperatur und die Temperaturdifferenzen können als einzelnes Signal, nämlich als Differenzsignal, berechnet werden. Dadurch vereinfacht sich die Handhabe des Korrekturparameters, insbesondere dessen Übergabe an die weiteren Berechnungen.

In einem weiteren erfindungsgemässen Ausführungsbeispiel basiert die Kraftmessvorrichtung auf dem Prinzip der elektromagnetischen Kraftkompensation, und mit dem Korrekturparameter wird eine Temperaturdifferenz charakterisiert, welche mit der Erzeugung der Kompensationskraft zusammen hängt. Bei diesem Prinzip wird in der Kraftmesszelle eine sogenannte Kompensationskraft erzeugt, welche jener Kraft entgegenwirkt, die auf die Kraftmessvorrichtung einwirkt. Somit bleibt die Kraftmesszelle auch bei einer Gewichtänderung stets in der gleichen Position, sodass das Phänomen des eingangs anhand des Standes der Technik beschriebenen Kriechens, also Probleme der Deformationen und/oder der Materialermüdungen, nicht oder nur in äusserst geringem Masse auftreten können.

Die bei der Erzeugung der Kompensationskraft freigesetzt Wärme führt im Allgemeinen zu erhöhten Temperaturen jener Bauteile, welche der Erzeugung der Kompensationskraft dienen. Dank der erfindungsgemässen Temperaturkorrektur kann nun dieser Einfluss besonders einfach korrigiert werden, indem die Temperaturen oder deren Auswirkungen an den kritischen Orten der Erwärmung berechnet werden. Daher kann auf die aufwändige Installation, Justierung und Überwachung von Temperatursensoren an diesen Bauteilen verzichtet werden. Das ist besonders vorteilhaft, da diese Bauteile in der Regel nur schwer zugänglichen sind.

In einer weiteren Ausgestaltung wird die Kompensationskraft mittels einer stromdurchflossenen Spule unter Freisetzung einer Verlustleistung erzeugt, und der Korrekturparameter in Abhängigkeit von dem Kraftmesssignal, insbesondere einer davon abgeleiteten Verlustleistung, berechnet. Diese Verlustleistung erzeugt eine Temperaturänderung in der Spule und den die Spule umgebenden Bauteilen. Diese Temperaturänderung wiederum bewirkt eine zeitlich veränderliche Kraftwirkung in Form einer sogenannten Lastdrift. Diese Lastdrift kann nun mit dem erfindungsgemässen Verfahren einfach und präzise korrigiert werden, indem der Korrekturparameter unmittelbar in Abhängigkeit zur der Wärmequelle, nämlich zu der in der Spule freigesetzten Verlustleistung, gesetzt wird.

Besonders vorteilhaft ist das erfindungsgemässe Verfahren bei zeitabhängigen Vorgängen, bei denen die Spule mit einem zeitlich veränderten Strom durchflossen wird, dessen Stromstärke von einer momentan einwirkenden Kraft abhängt. Somit werden bei unterschiedlichen Strömen unterschiedliche Verlustleistungen in Form von Wärme frei gesetzt, sodass in Folge verschiedene Temperaturen und damit zeitlich veränderte Kraftwirkungen entstehen. Durch die Berechnung können diese variablen Zustände unverzüglich und auf flexible Weise kompensiert werden.

In einer weiteren bevorzugten Ausgestaltung der Erfindung wird die Kompensationskraft durch das Zusammenwirken einer Spule und eines Permanentmagneten erzeugt und die Systemtemperatur entspricht einer Temperatur der Spule und/oder des Permanentmagneten. Da sowohl die Spule als auch der Permanentmagnet der Krafterzeugung dienen, sind diese Bauteile besonders kritisch bezüglich störender Eingriffe zur Messung der Systemtemperaturen.

Da die Spule in der Regel in einem Luftspalt des Permanentmagneten angeordnet ist, ergibt eine Temperaturänderung der Spule durch Wärmeübertragung über verschiedene Bauteile der Kraftmessvorrichtung oder über die Luft im Luftspalt eine entsprechende Temperaturänderung des Permanentmagneten. Eine Temperaturänderung des Permanentmagneten wiederum beeinflusst dessen Magnetfeld und damit die erzeugte Kompensationskraft. Somit führt eine konstante einwirkende Last zu einer zunehmenden Erwärmung, damit zu einer scheinbaren zeitabhängigen Veränderung der einwirkenden Last, also zum Phänomen der Lastdrift. Bei der erfindungsgemässen Berechnung der Systemtemperatur des Permanentmagneten kann nun diese Wärmeübertragung zwischen der ursächlichen Erzeugung der Temperaturänderungen in der Spule und deren Auswirkung beim Magnet in guter Näherung berechnet und damit zur Temperaturkorrektur herangezogen werden.

In einer weiteren bevorzugten Ausführung werden mindestens zwei Korrekturen des Kraftmesssignals durch mindestens zwei verschiedene, im Wesentlichen getrennte Module berechnet, wobei durch jedes Modul jeweils mindestens einer der genannten Korrekturparameter berechnet wird. Durch diesen modularen Aufbau kann die Berechnung auf die verschiedensten Temperatureinflüsse zusammengestellt und auf einfache Weise wechselnden Bedürfnissen angepasst werden.

Des weiteren betrifft die Erfindung eine Kraftmessvorrichtung, insbesondere eine Waage, mit einer Kraftmesszelle, welche ein elektrisches, zur einwirkenden Kraft korrespondierendes Kraftmesssignal erzeugt, mit einem in Distanz von den wärmeerzeugenden Bauteilen der Kraftmessvorrichtung angeordneten Temperatursensor, welcher eine Temperatur misst, die hauptsächlich zu einer auf die Kraftmessvorrichtung einwirkenden Umgebungstemperatur korrespondiert und ein zur gemessenen Temperatur entsprechendes elektrisches Temperaturmesssignal erzeugt, und mit einer Signalverarbeitungseinheit, welche derart konfiguriert ist, um das Kraftmesssignal anhand des Temperaturmesssignals und des Kraftmesssignals zu einem temperaturkorrigierten, an eine Anzeigeeinheit und/oder an eine weitere Verarbeitungseinheit übertragbaren Ausgabesignal zu verarbeiten. Dabei ist die Signalverarbeitungseinheit derart konfiguriert, dass ein im normalen Betrieb der Kraftmessvorrichtung zur Korrektur des Ausgabesignals dienender Korrekturparameter mittels eines thermodynamischen Modells berechenbar ist, welcher eine Temperaturdifferenz charakterisiert, die zwischen einer Systemtemperatur und der gemessen Temperatur und/oder einer ersten Systemtemperatur und einer zweiten Systemtemperatur besteht.

In einer weiteren Ausgestaltung der Kraftmessvorrichtung steht der Temperatursensor mit einem, insbesondere feststehenden, Bauteil der Kraftmessvorrichtung in thermischen Kontakt, wobei die Systemtemperatur des Bauteils hauptsächlich durch die einwirkende Umgebungstemperatur bestimmt ist. Dadurch kann der Einfluss der Umgebungstemperatur auf die Bauteile unmittelbar erfasst und somit eine genaue Kompensation dieser Einflüsse erreicht werden. Vorzugsweise wird der Temperatursensor an den feststehenden Bauteilen der Kraftmesszelle angeordnet, zum Beispiel an deren Befestigung, Dadurch kann der Temperatursensor auf einfache Weise an den unproblematischen Bauteilen der Kraftmessvorrichtung montiert und das Temperaturmesssignal ohne Beeinflussung der Kraftmessung weitergeleitet werden.

Vorzugsweise wird das erfindungsgemässe Verfahren mit einem Programm durchgeführt, welches in einer Signalverarbeitungseinheit ausführbar ist und welches zur Berechnung des Ausgabesignals nach dem erfindungsgemässen Verfahren dient. Dadurch kann ein hoher Grad an Flexibilität und Wiederverwendbarkeit des Rechenverfahrens erreicht werden.

Einzelheiten der erfindungsgemässen Verfahrens und der entsprechenden Kraftmessvorrichtung ergeben sich anhand der Beschreibung der in den Zeichnungen dargestellten Ausführungsbeispiele. Es zeigen:

Fig. 1      eine Waage 1 in beispielhafter Ausgestaltung mit symbolisch dargestellter Last L sowie mit einer von aussen einwirkenden Umgebungstemperatur Te und einer innerhalb der Kraftmessvorrichtung wirkenden Systemtemperatur Ts;

Fig. 2      eine vereinfachte schematische Zeichnung einer Kraftmesszelle 10, welche auf dem Prinzip der elektromagnetischen Kraftkompensation basiert, für eine Waage gemäss Figur 1 im Schnitt, welche ein Kraftmesssignals mL erzeugt und einen Temperatursensor 15 aufweist, der eine Temperatur Tm misst, die hauptsächlich zur Umgebungstemperatur Te korrespondiert und ein dazu entsprechendes Temperaturmesssignal erzeugt;

Fig. 3      das Blockschaltbild der Waage 1 gemäss Figur 1 und 2, mit einer Signalverarbeitungseinheit 20, welche anhand des Kraftmesssignals mL, des Temperaturmesssignals mT und eines Korrekturparameters CP ein temperaturkorrigiertes Ausgabesignal mLc erzeugt, das an eine Anzeigeeinheit 13 oder eine weitere Verarbeitungseinheit 14 weitergeleitet wird;

Fig. 4      ein Blockschaltbild gemäss Figur 3, mit einer ersten Temperaturkorrektur durch einen ersten Korrektursummanden C_S und einer erfindungsgemässen Korrektur durch einen zweiten Korrektursummanden C_LD, wobei der Korrekturparameter CP als relative Temperaturdifferenz dTr ausgebildet ist, und der zweite Korrektursummanden C_LD in Abhängigkeit von dieser relativen Temperaturdifferenz dTr berechnet wird;

Fig. 5a     ein weiteres Ausführungsbeispiel der erfindungsgemässen Berechnung zweier Temperaturdifferenzen dT1 und dT2, mit einem Blockschaltbild entsprechend Figur 4;

Fig. 5b     ein Schema zur Herleitung der Berechnungsmethode für das Ausführungsbeispiel gemäss Figur 5a;

Fig. 5c     schematisch dargestellte Temperaturverläufe bei einem Temperatursprung dTe der Umgebungstemperatur Te für das Ausführungsbeispiel gemäss Figur 5a;

Fig. 6      ein Blockschaltbild, bei welchem die Berechnungen gemäss Figuren 4, 5a,5b, und 5c als separat arbeitende Berechnungsmodule kombiniert sind.

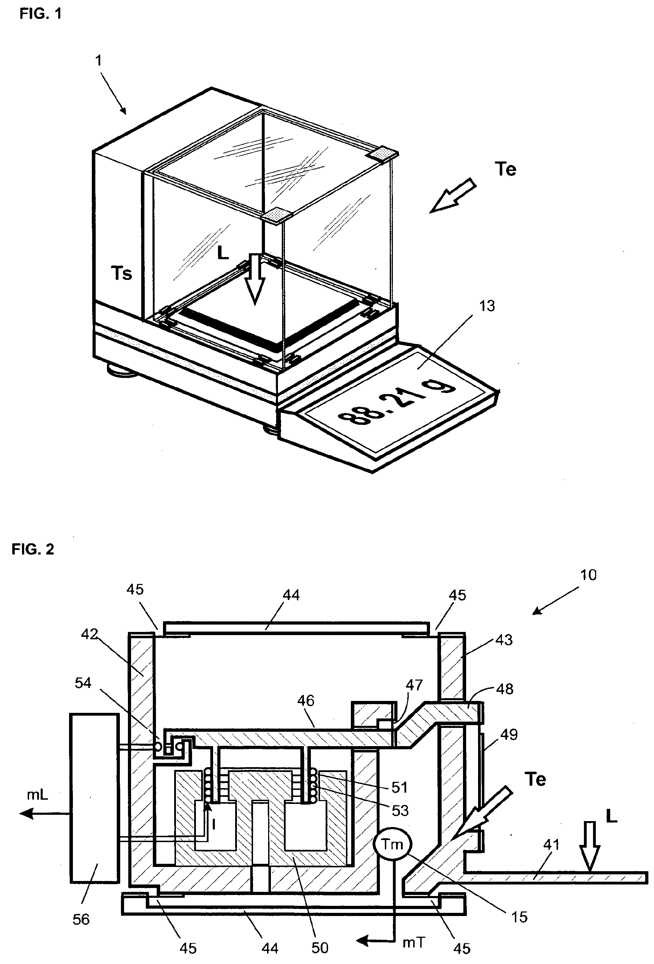

Figur 1 zeigt eine Waage 1 in beispielhafter Ausgestaltung mit einer symbolisch dargestellten Last L, welche auf die Waage einwirkt. Dabei wird eine Kompensationskraft F erzeugt, welche der einwirkenden Last L entgegenwirkt. Ferner ist eine Umgebungstemperatur Te symbolisch dargestellt, welche von aussen auf die Waage einwirkt und welche die Genauigkeit und Stabilität der Messungen wesentlich beeinflusst. Einerseits ändern sich die durch die Waage ermittelten Messwerte in Abhängigkeit der Last L, andererseits ändern sich diese Messwerte aber auch in Abhängigkeit der Umgebungstemperatur Te sowie durch die Einwirkung einer innerhalb der Kraftmessvorrichtung wirkenden Systemtemperatur Ts.

Diese Systemtemperatur Ts kann, wie in den folgenden Abschnitten beschrieben, durch verschiedene Ursachen von der Umgebungstemperatur Te abweichen. Zum Beispiel entsteht bei der Erzeugung der Kompensationskraft eine Verlustwärme im Innenraum der Waage und damit eine erhöhte Systemtemperatur Ts. Temperaturdifferenzen können aber auch aufgrund der Wärmeträgheit der Bauteile der Kraftmessvorrichtung entstehen, wenn die Temperaturänderungen der Bauteile den einwirkenden Temperaturänderungen nicht genügend schnell folgen können. Aufgabe der in der Waage 1 vorgesehenen Signalverarbeitungseinheit ist es daher, die zur Last L korrespondierenden Messwerte möglichst gut von diesen störenden Temperatureinflüssen zu trennen und damit genaue und stabile Messwerte auf der Anzeige 13, beispielsweise einer Flüssigkristallanzeige, zu erreichen.

Figur 2 zeigt stark schematisiert eine für die Verwendung in der Wägetechnologie geeignete Kraftmesszelle 10, welche auf dem Prinzip der elektromagnetischen Kraftkompensation basiert, im Schnitt. Die Kraftmesszelle 10 weist verschiedene Systemkomponenten oder Bauteile auf, nämlich eine Vorrichtung zur Kraftübertragung mit einer Parallelführung mit einem feststehenden Bereich 42 und einem vertikal auslenkbaren Bereich 43, welche jeweils an den Enden eines Paars von Lenkern 44 über Biegelager 45 angelenkt sind. Der vertikal auslenkbare Bereich 43 weist einen Ausleger 41 auf, der zur Aufnahme einer einwirkenden, zu messenden Last L dient, die durch einen Pfeil schematisch dargestellt ist. Die Normalkomponente der von der Last L, bewirkten Kraft wird vom vertikal auslenkbaren Bereich 43 durch ein Koppelelement 49 auf den ersten Hebelarm 48 des Hebels 46 übertragen. Der Hebel 46 ist mittels eines Biegelagers 47 an einem Teil des feststehenden Bereichs 42 abgestützt. Die Kraftmesszelle 10 weist ferner einen topfförmigen Permanentmagnet 50 auf, der in fester Verbindung mit dem feststehenden Teil 42 angeordnet ist und über einen Luftspalt 51 verfügt. Im Luftspalt 51 ist eine mit dem zweiten Hebelarm des Hebels 46 verbundene Spule 53 angeordnet. Die Spule 53 wird von einem Kompensationsstrom Ic durchflossen, dessen Grösse von der auf den Hebel 46 einwirkenden Kraft abhängt. Die Lage des Hebels 46 wird von einem opto-elektrischen Positionsgeber 54 gemessen, der mit einer Regeleinrichtung 56 verbunden ist. Die Regeleinrichtung 56 regelt den Kompensationsstrom Ic in Abhängigkeit der zugeführten Positions-Messsignale derart, dass der Hebel 46 stets in gleicher Lage gehalten oder nach einer Änderung der Last L in diese wieder zurückgeführt wird. Die Regeleinrichtung 56 erzeugt ein digitales oder analoges Kraftmesssignal mL, welches zur weiteren Signalverarbeitung weitergeleitet wird.

Je nach unterschiedlich einwirkender Kraft muss ein entsprechend unterschiedlicher Kompensationsstrom Ic durch die Spule 53 geleitet werden. Dadurch entsteht eine lastabhängige Verlustleistung in der Spule 53. Diese Spule 53 wirkt somit als lastabhängige Wärmequelle und führt somit zu einer entsprechenden Temperaturänderung der betroffenen Bauteile. Diese Temperaturänderung betrifft besondere die Spule 53 selbst, aber auch die durch Wärmeübertragung erwärmten Bauteile, beispielsweise den Permanentmagnet 50, den Hebel 46 und den Positionsgeber 54.

Es ist ein Temperatursensor 15 am feststehenden Teil 42 der Kraftmesszelle 10 angeordnet. Dadurch wird mit diesem Temperatursensor 15 eine Temperatur Tm gemessen, welche zu einer Systemtemperatur des feststehenden Teils 42 korrespondiert. Da der feststehenden Teil 42 in direktem thermischen Kontakt mit der einwirkenden Umgebungstemperatur Te steht, wird eine Temperatur Tm gemessen, welche indirekt zu der auf die Waage 1 einwirkenden Umgebungstemperatur Te korrespondiert.

Der Temperatursensor 15 ist in einiger Distanz von der wärmeerzeugenden Spule 53 angeordnet. Somit hat die Temperatur der Spule 53 nur einen untergeordneten Einfluss auf die gemessene Temperatur Tm. Folglich wird mit dem Temperatursensor 15 hauptsächlich die Einwirkung der Umgebungstemperatur Te auf die Waage 1 gemessen.

Der Temperatursensor 15 ist derart angeordnet, dass die gemessene Temperatur Tm weitgehend unabhängig von einer Systemtemperatur Ti eines wärmeerzeugenden Bauteils der Waage 1 ist. Zum Beispiel könnte der Temperatursensor 15 auch an einer Gehäusewand der Waage 1 angeordnet sein.

Der Temperatursensor 15 erzeugt ein digitales oder analoges Temperaturmesssignal mT, welches zur Systemtemperatur Ts des feststehenden Teils 42 und damit hauptsächlich zu der Umgebungstemperatur Te korrespondiert. Dieses Temperaturmesssignal mT wird dann ebenfalls, also wie das Kraftmesssignal mL, zur weiteren Signalverarbeitung weitergeleitet.

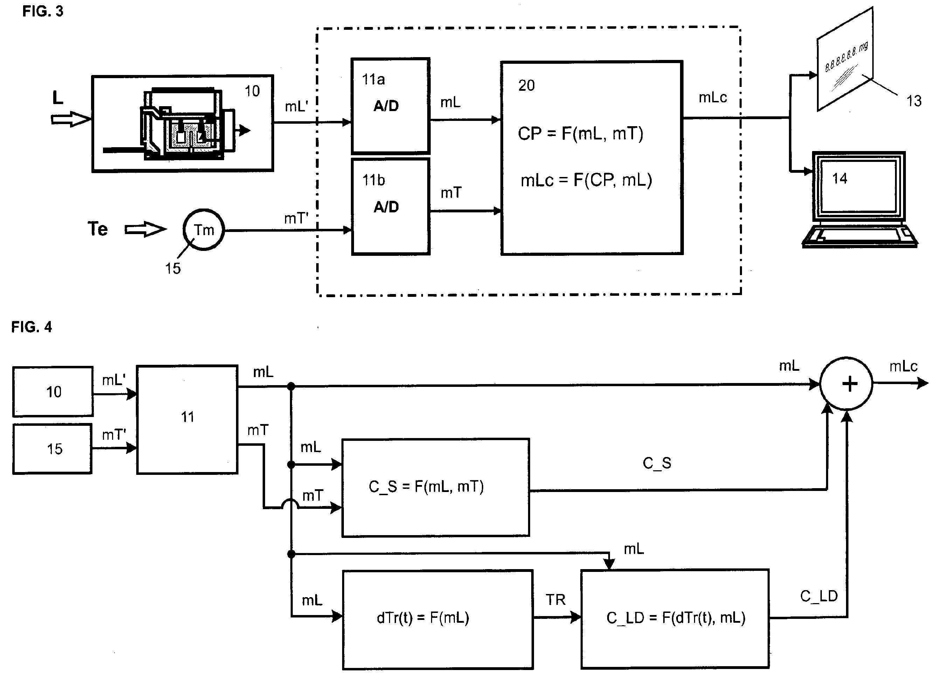

Figur 3 zeigt in beispielhafter Darstellung das Blockschaltbild der in Figur 1 und 2 gezeigten Waage 1. Die Kraftmesszelle 10 erzeugt in diesem Beispiel ein analoges Kraftmesssignal mL', welches zu der auf die Kraftmesszelle 10 einwirkenden Last L korrespondiert. Die Kraftmesszelle 10 ist mit einem Analog-Digital-Wandler 11 a verbunden, um das analoge Messsignal an diesen weiterzuleiten. Der Analog-Digital-Wandler 11a wandelt das zugeführte Kraftmesssignal mL' in ein digitales Kraftmesssignal mL um, wobei dieses digitale Kraftmesssignal mL ebenfalls zu der einwirkenden Last L korrespondiert (analoge Signale werden in dieser Figur mit Hochkomma bezeichnet, die entsprechenden digitalen Signal jedoch ohne Hochkomma). Der Ausgang des Analog-Digital-Wandlers 11 a ist mit einem ersten Eingang einer Signalverarbeitungseinheit 20 verbunden, um das Kraftmesssignal mL an diese weiterzuleiten.

Ferner umfasst die Waage den zuvor beschriebenen Temperatursensor 15 zur Erfassung der gemessenen Temperatur Tm. Dieser Temperatursensor 15 ist über einen weiteren Analog-Digital-Wandler 11 b mit dem zweiten Eingang der Signalverarbeitungseinheit 20 verbunden, um das vom Temperatursensor 15 erzeugte Temperaturmesssignal mT', nach der Wandlung in digitale Form, der Signalverarbeitungseinheit 20 als weitere Eingabengröße zur Verfügung zu stellen.

In diesem Beispiel werden für das Kraftmesssignal mL und für das Temperaturmesssignal mT separate Analog-Digital-Wandler 11 a und 11 b eingesetzt, da oftmals die Anforderungen bezüglich Auflösung und Geschwindigkeit der gemessenen Signale stark voneinander abweichen. Die Analog-Digital-Wandler 11a und 11 b können aber auch in einer Einheit zusammengefasst sein. Ferner können die Analog-Digital-Wandler 11 a und 11 b auch in die Kraftmesszelle 10, beziehungsweise in den Temperatursensor 15 oder in die Signalverarbeitungseinheit 20 integriert sein.

In der Recheneinheit 20 wird das ursprüngliche Kraftmesssignal mL anhand des Temperaturmesssignals mT zu einem temperaturkorrigierten Ausgabesignal mLc verarbeitet. Das temperaturkorrigierte Ausgabesignal mLc korrespondiert näherungsweise zum ursprünglichen Kraftmesssignal mL und damit ebenfalls zur einwirkenden Last L. Der Ausgang der Signalverarbeitungseinheit 20 ist mit einer Anzeigeeinheit 13 verbunden, so dass das korrigierte Ausgabesignal mLc an diese weitergeleitet und dort angezeigt werden kann. Das korrigierte Ausgabesignal mLc kann auch an eine weitere Verarbeitungseinheit 14, beispielsweise an eine Überwachungs-/ Alarmierungsvorrichtung oder an einen Leitrechner oder an eine Prozesssteuerung weitergeleitet werden.

In der Signalverarbeitungseinheit 20 wird aus dem Kraftmesssignal mL und aus dem Temperaturmesssignal mT ein Korrekturparameter CP berechnet. Dieser Korrekturparameter CP charakterisiert, wie in den folgenden Abschnitten beschrieben, eine Temperaturdifferenz, die zwischen einer Systemtemperatur und der gemessen Temperatur Tm und/oder einer ersten Systemtemperatur und einer zweiten Systemtemperatur besteht und dient zur Erzeugung des temperaturkorrigierten Ausgabesignals mLc. In einem weiteren Schritt wird das Kraftmesssignal mL mittels des Korrekturparameters CP zu einem temperaturkorrigierten Ausgabesignal mLc verarbeitet. Diese Rechenoperationen können in allgemeiner Form durch folgende Formeln dargestellt werden:

$$CP = F(mL, mT)$$

$$mLc = F(CP, mL, mT).$$

Die zuvor beschriebenen Blöcke, nämlich der Analog-Digital-Wandler 11 a und 11 b und die digitale Verarbeitungseinheit 20 sind vorzugsweise in einer funktionalen Einheit implementiert und geeignet zusammengefasst (gestrichelte Linie), beispielsweise als Baugruppen auf einer gemeinsamen Platine, in einem gemeinsamen Gehäuse oder in einem Mikroprozessor.

Figur 4 zeigt ein Blockschaltbild gemäss Figur 3, jedoch mit einer Kombination bestehend aus einer ersten Temperaturkorrektur durch einen ersten Korrektursummanden C_S und einer erfindungsgemässen Korrektur durch einen zweiten Korrektursummanden C_LD, welcher mittels des gemäss Figur 3 beschriebenen Korrekturparameters CP berechnet wird. Dabei charakterisiert der Korrekturparameter CP eine relative zeitabhängige Temperaturdifferenz dTr(t), welche sich aus der Temperaturdifferenz zwischen der Systemtemperatur Ts der Spule 53 und der gemessen Temperatur Tm ergibt.

Die ursprünglichen Signale, das Messsignal mL' des Kompensationsstroms Ic und das Temperaturmesssignal mT' der gemessenen Temperatur Tm, werden dem Analog-Digital-Wandler 11 zugeführt und dort in digitale Form gewandelt. Die entsprechenden Ausgangssignale, nämlich das Kraftmesssignal mL und das Temperaturmesssignal mT stehen dann in digitaler Form für die folgenden Berechnungen zur Verfügung.

Im Folgenden sei kurz auf die Ermittlung des Korrektursummanden C_S, die im Wesentlichen den bekannten Schritten gemäss dem Stand der Technik, zum Beispiel dem in GB 1495278 offenbarten Verfahren folgt:

Das Magnetfeld im Permanentmagnet 50 hat eine relativ grosse Temperaturabhängigkeit mit einem Temperaturkoeffizient von -350 ppm/K für SmCo. Folglich ist auch die Stromstärke in der sich im Magnetfeld befindlichen Spule 53 relativ stark von der Temperatur abhängig. Das Kraftmesssignal mL korrespondiert wiederum mit der Stromstärke in der Spule 53. Daher wird, wie aus dem Stand der Technik bekannt, in einer ersten Korrektur das Kraftmesssignal mL bezüglich der Temperaturabhängigkeit des Permanentmagneten 50 bezüglich der gemessenen Umgebungstemperatur Te kompensiert. Dementsprechend wird diese Korrektur auch als statische Temperaturkorrektur oder als Temperaturkorrektur erster Ordnung bezeichnet und betrifft eine sogenannte Basiskorrektur für die Lastdrift. Dabei wird aus dem Kraftmesssignal mL und aus dem Temperaturmesssignal mT der erste Korrektursummand C_S gemäss folgender Formel berechnet:

$$C\_S = mL * TK * mT$$

wobei die Grösse TK ein konstanter, typischerweise empirisch ermittelter oder aus Datenblättern erhältlicher Wert, nämlich der Temperaturkoeffizient TK ist. Der erste Korrektursummand C_S wird in diesem Beispiel in einfacher linearer Abhängigkeit aus dem Kraftmesssignal mL und dem Temperaturmesssignal mT berechnet. Der erste Korrektursummand C_S könnte aber auch unter Berücksichtigung höherer Terme, zum Beispiel dem quadrierten Kraftmesssignal $(mL)^2$, berechnet werden.

Der berechnete erste Korrektursummand C_S wird einem Summenoperator zugeführt, der durch eine Addition des ersten Korrektursummanden C_S zum ursprünglichen Kraftmesssignal mL eine entsprechende Korrektur durchführt. Das Kraftmesssignal mL wird somit durch eine erste Temperaturkorrektur gegenüber Änderungen der einwirkenden Last L und gegenüber Änderungen der gemessenen Temperatur Tm korrigiert. In gleicher Weise wie in Figur 3 wird das korrigierte Messsignal schliesslich an eine Anzeigeeinheit 13 und/oder an eine weitere Verarbeitungseinheit 14 weitergeleitet.

Es wird nun zusätzlich und erfindungsgemäss aus dem Kraftmesssignal mL ein, Figur 3 entsprechender Korrekturparameter CP gemäss der detaillierten Beschreibung der nächsten Abschnitte berechnet. Aus diesem Korrekturparameter CP wird in einer nachgeschalteten Berechnung ein zusätzlicher zweiter Korrektursummand C_LD berechnet. Anhand dieses zweiten Korrektursummanden C_LD wird dann das Kraftmesssignal mL zusätzlich korrigiert. Somit wird durch die erfindungsgemässe Korrektur eine weitere verbesserte Temperaturkorrektur namentlich eine Lastdriftkorrektur vorgenommen.

Der Korrekturparameter CP als relative zeitabhängige Temperaturdifferenz dTr(t) charakterisiert in diesem Ausführungsbeispiel den gleichen charakteristischen zeitlichen Verlauf wie eine prinzipiell messbare Temperaturdifferenz und unterscheidet sich von dieser nur durch entsprechende Normierungskonstanten.

In einer ersten Berechnung wird aus dem Kraftmesssignal mL eine zeitabhängige Verlustleistung P(t) ermittelt, welche den zeitlichen Verlauf der Verlustleistung in der Spule 53 repräsentiert. Dabei ist in diesem Beispiel das Kraftmesssignal mL proportional zum Spulenstrom Ic, sodass für die Verlustleistung P(t) gilt:

$$P(t) = c * mL^2$$

wobei c eine Proportionalitätskonstante ist. In anderen Fällen, bei denen keine Proportionalität vorliegt, kann die Verlustleistung P(t) ebenfalls mit einfachen Berechnungen aus dem Kraftmesssignal mL ermittelt werden.

Des weitern wird zur Berechnung der relativen Temperaturdifferenz dTr(t) eine zeitabhängige Antwortfunktion S(t) verwendet. Der Antwortfunktion S(t) liegt eine thermodynamische Gesetzmässigkeit zugrunde, welche das zeitabhängige Verhalten einer Temperaturdifferenz der Waage 1 charakterisiert. Daher ergibt sich die Antwortfunktion S(t) aus einer Gesetzmässigkeit der Thermodynamik, nämlich aus dem Wärmefluss und/oder der Wärmeleitung innerhalb der Waage 1.

Die zeitabhängige relative Temperaturdifferenz dTr(t) wird dann durch eine mathematische Operation der Faltung der Verlustleistung P(t) mit der abgeleiteten Antwortfunktion S(t) berechnet:

$$dTr(t) = P(t) \cdot S(0) + \int_0^t P(t') \cdot \frac{\delta S(t-t')}{\delta(t-t')} dt'.$$

Zur Bestimmung der Antwortfunktion S(t) wird als Beispiel ein einfaches thermodynamisches Modell angegebenen. Demgemäss ergibt sich die Antwortfunktion S(t) als sogenannte Schrittantwort aus einer stufenförmigen Änderung des Kraftmesssignals mL. Dabei bildet die stufenförmige Änderung eine Eingangsgrösse auf die Waage 1, welche daraus eine entsprechende Antwortfunktion gemäss einer thermodynamischen Gesetzmässigkeit erzeugt, in diesem Fall gemäss der Wärmeleitung in den Bauteilen der Kraftmessvorrichtung. Gemäss dieser Gesetzmässigkeit ergibt sich die zeitabhängige Antwortfunktion S(t) gemäss folgender Formel:

$$S(t) = 1 - e^{-t/\tau}$$

mit einer charakteristischen Zeitkonstanten $\tau$. In diesem Fall berechnet sich dann die relative Temperaturdifferenz dTr(t) gemäss der obigen Formel zu:

$$dTr(t) = \frac{1}{\tau} \int_0^t P(mL(t')) \cdot e^{-\frac{t-t'}{\tau}} dt'$$

Zur Modellierung können auch andere Antwortfunktionen S(t) oder Schrittantworten verwendet werden, insbesondere Schrittantworten welche eine Kombination von mehreren Exponentialfunktionen aufweisen.

Zur Berechnung des Faltungsintegrals der zeitabhängigen relativen Temperaturdifferenz dTr(t) stehen verschiedene Methoden zur Verfügung. Zum Beispiel kann bei einer konstanten Abtastrate mit der Samplingzeit $t_s$ das Faltungsintegral durch eine Summe approximiert werden:

$$dTr(t=nt_s) = (t_s/\tau)\ \Sigma_P(n)$$

wobei die Summe $\Sigma_P(n)$ durch die Rekursionsformel

$$\Sigma_P(n) = c\ \Sigma_P(n-1) + 0.5(c\ P(n-1) + P(n))$$

mit

$$c = e^{-t_s/\tau} < 1$$

gegeben ist.

Diese Rechenoperationen können auf verschiedenste Weise durchgeführt werden, beispielsweise als Rechenprogramm oder als rekursive Schaltung, welche Verzögerungseinheiten und/oder Summenoperatoren und/oder Multiplikations-Operatoren aufweist. Dadurch kann das Faltungsintegral mit einfachen mathematischen Operationen effizient und mit hoher Genauigkeit berechnet werden.

Somit steht am Ende dieses Berechnungsblocks der Korrekturparameter CP als relative Temperaturdifferenz dTr(t) zur Verfügung. Diese Temperaturdifferenz dTr(t) würde im Stand der Technik durch entsprechende Messungen mit einem Temperatursensor ermittelt werden.

In einer weiteren Berechnung wird aus der relativen Temperaturdifferenz dTr(t) der zweite Korrektursummand C_LD gemäss folgender Formel berechnet:

$$C\_LD = mL * TKLD * dTr(t)$$

wobei die Grösse TKLD ein vorgegebener, konstanter Temperaturkoeffizient ist. Bei der Berechnung handelt es sich um einen sehr einfachen Fall. Durch Berücksichtigung höherer Terme kann jedoch die Genauigkeit der Berechnung gemäss vorgegebenen Anforderungen verbessert werden.

Der zweite Korrektursummand C_LD wird wie im Fall der ersten Korrektur dem Summenoperator zugeführt, der durch eine zusätzliche Addition des zweiten Korrektursummanden C_LD eine entsprechende zweite Korrektur vornimmt. Das Kraftmesssignal mL wird somit bezüglich der relativen Temperaturdifferenz dTr(t) und der daraus folgenden Lastdrift korrigiert, welche sich aus der Erzeugung der Kompensationskraft ergibt. Das lastdriftkorrigierte Ausgabesignal mLc steht dann am Ausgang der Signalverarbeitungseinheit 20 zur Verfügung.

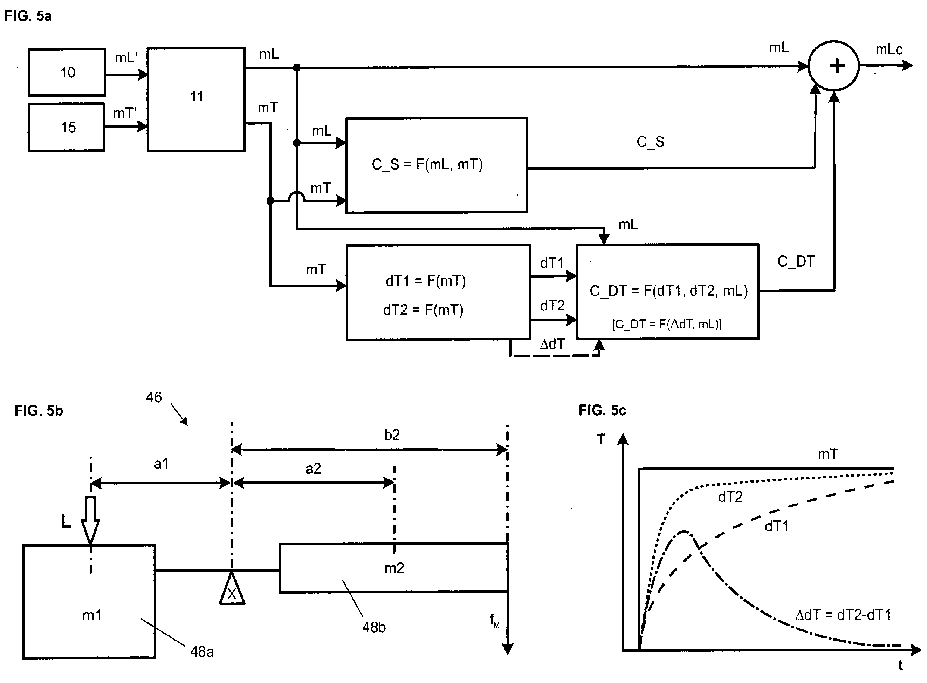

Figuren 5a, 5b und 5c zeigen die Korrektur eines weiteren Temperaturphänomens in der erfindungsgemässen Berechnung des Korrekturparameters CP, welcher das zeitabhängige, transiente Temperaturverhalten der Waage gemäss Figuren 1 und 2 charakterisiert, nämlich das dynamischen Temperaturverhalten der Waage 1 mit zwei Hebelarmen 48a, 48b bei zeitlichen Temperaturänderungen der Umgebungstemperatur Te in der Form eines sogenannten Temperatursprungs dTe. Dabei charakterisiert der Korrekturparameter CP eine Gruppe von zwei Temperaturdifferenzen dT1 und dT2, welche sich jeweils aus der Differenz zwischen der Systemtemperatur Ts1, Ts2 des jeweiligen Hebelarms 48a, 48b und der gemessen Temperatur Tm ergeben. Wie in den folgenden Abschnitten beschrieben, kann der Korrekturparameter CP aber auch ein Differenzsignal $\Delta dT$ charakterisieren, welches sich wiederum aus der Differenz zwischen den beiden Temperaturdifferenzen dT1 und dT2 ergibt.

Die Umgebungstemperatur Te wirkt auf einen Hebel 46 in der Kraftmessvorrichtung 1, und damit auf die beiden Hebelarme 48a und 48b. Demzufolge ergibt sich eine erste Temperaturdifferenz dT1 zwischen der ersten Systemtemperatur Ts1 des ersten Hebelarms 48a und der gemessenen Temperatur Tm sowie eine zweite Temperaturdifferenz dT2 zwischen der zweiten Systemtemperatur Ts2 des zweiten Hebelarms 48b und der gemessenen Temperatur Tm.

Figur 5a zeigt ein Blockschaltbild gemäss Figur 4, jedoch mit einer erfindungsgemässen Berechnung von zwei Temperaturdifferenzen dT1 und dT2. Somit umfasst der Korrekturparameter CP zwei Temperaturdifferenzen dT1 und dT2, welche jeweils aus dem in Figur 3 und 4 beschriebenen Temperaturmesssignal mT berechnet werden. Dabei sind auch in diesem Beispiel die berechneten Temperaturdifferenzen dT1 und dT2 nicht notwendigerweise real existierende Grössen sondern sind wie im vorangehenden Ausführungsbeispiel als Rechengrössen anzusehen. Die Temperaturdifferenzen dT1 und dT2 werden anhand der folgenden Herleitung berechnet.

Figur 5b zeigt ein stark vereinfachtes Prinzipschema einer Waage gemäss Figur 4 mit einem Hebel 46, der zur Übertragung der einwirkenden Last L auf die Spule 53 dient. Dieser Hebel 46 ist im Drehpunkt X, der sogenannten Hebelstütze, beweglich gelagert. Der Hebel 46 weist einen ersten Hebelarm 48a und einen zweiten Hebelarm 48b auf, welche jeweils durch die entsprechenden Massen m1 und m2 dargestellt sind.

Der Schwerpunkt des ersten Hebelarms 48a mit der Masse $m_1$ hat den Abstand $a_1$ vom Drehpunkt X der Hebelvorrichtung. Diese Masse entspricht der Masse des vertikal auslenkbaren Bereiches 43 der Waage. Der zweiten Hebelarm 48b mit der Masse m2 entspricht der Mechanik zur Kraftübertragung in der Waage 1 und hat den Schwerpunkts-Abstand $a_2$. Somit ergibt sich ohne eine einwirkende Last L die Gleichgewichtsbedingung:

$$m_1 \, a_1 = m_2 \, a_2$$

Bei einer Belastung wirkt auf der linken Seite zusätzlich die Last L, welches am Ende der rechten Seite durch die Magnetkraft $f_M$ kompensiert wird. Daraus ergibt sich unter der Annnahme, dass das Verhältnis des Schwerpunkt-abstandes $a_2$ zur Länge $b_2$ der rechten Seite konstant gleich $\beta$ ist:

$$L \, a_1 = f_M \, b_2$$

$$a_2 = \beta \, b_2$$

wobei die Hebeluntersetzung gleich $b_2/a_1$ ist.

Bei einem Temperatursprung dTe der Umgebungstemperatur, hier nach oben, werden die beiden Massen $m_1$ und $m_2$ erwärmt. Die Masse $m_1$ ist relativ schwer und kompakt und somit ist das Verhältnis der Oberfläche zur Masse klein. Deshalb wird sich die erste Systemtemperatur Ts1 der Masse m1 nur langsam an den Temperatursprung dTe anpassen. Im Gegensatz dazu ist die Masse $m_2$ leicht und hat eine relativ große Oberfläche. Deren Temperatur, also die zweite Systemtemperatur Ts2, wird relativ schnell dem Temperatursprung dTe folgen. Damit ergeben sich für die Hebelarme 48a und 48b während einer gewissen Zeit unterschiedliche Systemtemperaturen Ts1 und Ts2 und damit auch unterschiedliche Temperaturendifferenzen bezüglich der Umgebungstemperatur Te, nämlich dT1 für den ersten Hebelarm 48a und dT2 für den zweiten Hebelarm 48b.

Mit dem Ausdehnungskoeffizienten $\alpha$ ergeben sich folglich auf beiden Seiten des Hebels 46 unterschiedliche Längenänderungen, nämlich

$\alpha$ * dT1 für den ersten Hebelarm 48a und

$\alpha$ * dT2 für den zweiten Hebelarm 48b.

Folglich verschiebt sie nach dem Temperatursprung dTe das mechanische Gleichgewicht gemäss der Formel:

$$(m_1 + L) \, a_1 \, (1 + \alpha \, dT1) = m_2 \, a_2 \, (1 + \alpha \, dT2) + f_M \, b_2 \, (1 + \alpha \, dT2)$$

Wie im vorangehenden Ausführungsbeispiel gemäss Figur 4 werden die Temperaturendifferenzen dT1 und dT2 jeweils mit einem Faltungsintegral und den zeitabhängige Antwortfunktionen S1(t) und S2(t) und den charakteristischen Zeitkonstanten $\tau$1 und $\tau$2 berechnet.

Dementsprechend gilt für die jeweiligen Faltungsintegrale:

$$dT_i(t) = mT_i(t) \cdot S_i(0) + \int_0^t mT_i(t') \frac{\delta S_i(t-t')}{\delta(t-t')} dt'$$

mit i=1 und 2. Die Berechnung der Temperaturendifferenzen dT1 und dT2 unterscheidet sich also nur in den verschiedenen Zeitkonstanten $\tau$1 und $\tau$2.

Im Fall eines einfachen thermodynamischen Modells kann, wie im Beispiel nach Figur 4, die Antwortfunktion S(t) als Schrittantwort mit den charakteristischen Zeitkonstanten $\tau$1 und $\tau$2 angegeben werden:

$$S(t) = 1 - e^{-t/\tau_i}$$

und somit für das Faltungsintegral:

$$dT_i(t) = \frac{1}{\tau_i} \int_0^t mT(t') e^{-\frac{t-t'}{\tau_i}} dt'$$

mit i=1 und 2.

Bei einer konstanten Abtastrate können auch in diesem Fall, wie bei der Berechnung des Faltungsintegrals im vorangehenden Ausführungsbeispiel der Lastdriftkompensation gemäss Figur 4, die Faltungsintegrale sehr effizient berechnet werden, indem diese durch eine Summe angenähert und in rekursiver Weise berechnet werden.

Somit steht der Korrekturparameter CP in Form der beiden Temperaturendifferenzen dT1 und dT2 zur weiteren Berechnung eines weiteren, dritten Korrektursummanden C_DT zur Verfügung.

Die beiden Temperaturendifferenzen dT1 und dT2 können auch zu einem einzelnen Differenzsignal $\Delta$dT zusammengefasst werden gemäss folgender Formel:

$$\Delta dT = dT2 - dT1 = (Ts2 - Te) - (Ts1 - Te) = Ts2 - Ts1$$

Das Differenzsignal $\Delta$dT stellt somit die Differenz zwischen zwei Systemtemperaturen, nämlich die Differenz zwischen der zweiten Systemtemperatur Ts2 und der ersten Systemtemperatur Ts1 dar. Folglich charakterisiert der Korrekturparameter CP mittels des Differenzsignals $\Delta$dT die Differenz zwischen den beiden Temperaturdifferenzen dT1 und dT2. Schliesslich wird dann der Korrekturparameter CP in Form dieses Differenzsignals $\Delta$dT an das nachfolgende Berechnungsmodul weitergegeben (in Figur 5bgestrichelt dargestellt).

Figur 5c zeigt einen beispielhaften zeitlichen Verlauf der Temperaturendifferenzen dT1 und dT2 nachdem ein Temperatursprung dTe (durchgezogen gezeichnet) auf die Waage wirkt. Das Temperaturmesssignal mT, welches weitgehend zu dem Temperatursprung dTe korrespondiert, ist auf vereinfachende Weise als stufenförmige durchgezogene Linie dargestellt. Während die Temperaturdifferenz dT2 (punktiert gezeichnet) dem Temperatursprung dTe schneller folgen kann, reagiert die Temperaturdifferenz dT1 (gestrichelt gezeichnet) langsamer. Das Differenzsignal $\Delta$dT, also die Differenz der beiden Temperaturendifferenzen: dT2-dT1, (strichpunktiert gezeichnet) zeigt das beobachtete Verhalten, nämliche einen anfängliche starken Temperatureinfluss, welche nach einiger Zeit wieder abklingt.

Bei konstanter Last L ergibt sich eine zeitliche Änderung der Magnetkraft $f_M$ zu:

$$fm(t) - fm(0) = a_1\alpha \frac{(dT1-dT2)(L+m1)}{b_2(1+\alpha dT2)} \approx \frac{a_1}{b_2}\alpha \Delta dT (L+m_1)$$

Daher wird als dritter Korrektursummand C_DT gemäss folgender Formel bestimmt:

$$C\_DT = c * (dT1 - dT2) * (mL + m0) = c * \Delta dT * (mL + m0)$$

wobei c und m0 Konstanten sind, die in geeigneter Weise zu bestimmen sind, beispielsweise durch Justierung.

Schliesslich wird dieser dritte Korrektursummand C_DT wird wie im Fall der ersten Korrektur oder der zweiten Korrektur dem Summenoperator zugeführt, der durch eine zusätzliche Addition des dritten Korrektursummanden C_DT eine entsprechende Korrektur vornimmt. Das Kraftmesssignal mL wird somit zusätzlich bezüglich dynamischer Änderungen der Umgebungstemperatur Te korrigiert. Wiederum steht das bezüglich Temperaturdifferenzen korrigierte Ausgabesignal mLc zur weiteren Verarbeitung zur Verfügung.

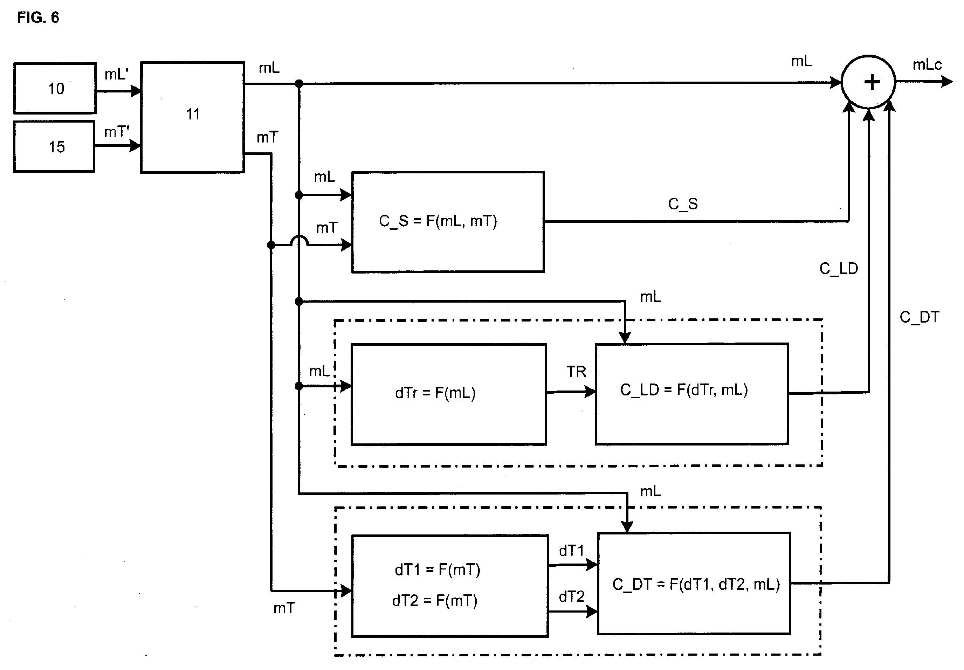

Figur 6 zeigt ein Blockschaltbild bei dem die Berechnungen gemäss Figur 4 und 5, nämlich die Berechnung der Lastdriftkorrektur und die Berechnung des dynamischen Temperaturverhaltens als einzelne, im Wesentlichen getrennte Berechnungsmodule kombiniert sind. Diese Module sind weitgehend unabhängig, und können je nach Bedarf in die Gesamtberechnung integriert werden. Dabei können auch weitere Module in beliebiger Anzahl zusammengeschaltet werden.

Sämtliche Korrektursummanden, in diesem Fall der erste Korrektursummand C_S, der zweite Korrektursummand C_LD zur Lastdrift-Korrektur und der dritte Korrektursummand C_DT zur Korrektur des dynamischen Temperaturverhaltens werden dem Summenoperator zugeführt. Durch die Addition der drei Korrektursummanden C_S+C_LD+C_DT wird dann das Kraftmesssignal mL bezüglich der zuvor beschriebenen Einflüsse korrigiert. Das korrigierte Ausgabesignal mLc wird zur weiteren Verarbeitung, beispielsweise zur Weiterleitung an eine Anzeigeeinheit oder an eine weitere Verarbeitungseinheit weitergeleitet.

Des Weiteren können auch beliebige Kombinationen der verschiedenen Messsignale und Temperatureinwirkungen berechnet werden. Zum Beispiel kann die kurzfristig erhöhte Temperaturänderung eines Bauteils zu unterschiedlichen Systemtemperaturen bei anderen Bauteilen führen. Beispielsweise kann eine sprunghaft erhöhte Magnettemperatur, wie sie beispielsweise beim Auflegen einer Last auf die Kraftaufnahme entsteht, zur Berechnung der Temperaturänderungen dT1 und dT2 der jeweiligen Hebelarme 48a und 48b und der damit verbundenen Längenänderung herangezogen werden. Somit kann das zeitabhängige Temperaturverhalten nicht nur aufgrund einer Änderung der Umgebungstemperatur Te sondern auch anhand der Verlustleistung P(t) in der Spule, also anhand des Kraftmesssignals mL, berechnet werden.

Das erfindungsgemässe Verfahren zur Temperaturkorrektur und die erfindungsgemässe Kraftmessvorrichtung 1 wurden in bevorzugten Ausgestaltungen beschrieben und dargestellt. Die Kraftmessvorrichtung wurde in der Ausgestaltung einer Waage 1 beschrieben. Die Erfindung ist jedoch auch bei anderen Kraftmessvorrichtungen, wie thermogravimetrischen Messgeräten, Wägemodule, Lastzellen und Messsensoren, die gegebenenfalls Teil einer Waage bilden können, einsetzbar. Ferner sind die Vorrichtungen natürlich auch nicht auf eine bestimmte Wahl, Konfiguration, Gruppierung und Anwendung der Komponenten beschränkt.

Bezugszeichenliste

| | |
|---|---|
| 1 | Kraftmessvorrichtung / Waage |
| 10 | Kraftmesszelle |
| 11, 11a, 11 b | Analog-Digital-Wandler |
| 13 | Anzeigeeinheit |
| 14 | weitere Verarbeitungseinheit |
| 15 | Temperatursensor |
| 20 | Signalverarbeitungseinheit |
| 41 | Ausleger |
| 42 | feststehender Bereich |
| 43 | vertikal auslenkbarer Bereich |
| 44 | Lenker |
| 45, 47 | Biegelager |
| 46 | Hebel |
| 48, 48a, 48b | Hebelarm |
| 49 | Koppelelement |
| 50 | Permanentmagnet |
| 51 | Luftspalt |
| 53 | Spule |

| 54 | Positionsgeber |
| --- | --- |
| 56 | Regeleinrichtung |

| a1, a2 | Abstand |
| --- | --- |
| C_S, C_LD, C_DT | Korrektursummand |
| CP | Korrekturparameter |
| dT1, dT2 | Temperaturdifferenz |
| dTe | Temperatursprung |
| dTr | relative Temperaturdifferenz |
| F, F1, F2 | Übertragungsfunktion |
| $f_M$ | Magnetkraft |
| Ic | Kompensationsstrom |
| L | einwirkende Kraft / Last |
| m, m1, m2 | Masse |
| mL, mL' | Kraftmesssignal |
| mT, mT' | Temperaturmesssignal |
| mLc | Ausgabesignal |
| P(t) | Verlustleistung |
| S(t), S1 (t), S2(t) | Antwortfunktion |
| Ts, Ts1, Ts2 | Systemtemperatur |
| Te | Umgebungstemperatur |
| Tm | gemessene Temperatur |
| TK, TKLD | Temperaturkoeffizient |
| X | Drehpunkt |
| $\alpha$ | Ausdehnungskoeffizient |
| $\beta$ | Verhältnis |
| $\Delta dT$ | Differenzsignal |
| $\tau$, $\tau_1$, $\tau_2$ | Zeitkonstante |

**Patentansprüche**

1. Verfahren zur Temperaturkorrektur einer Kraftmessvorrichtung (1) im Messbetrieb, insbesondere einer Waage, welches die Schritte aufweist:

   - Erzeugung eines elektrischen, zur einwirkenden Kraft korrespondierenden Kraftmesssignals (mL) mittels einer Kraftmesszelle (10);
   - Messung einer Temperatur (Tm) mittels eines einzigen in Distanz von den wärmeerzeugenden Bauteilen der Kraftmessvorrichtung (1) angeordneten Temperatursensors (15), welche Temperatur (Tm) hauptsächlich zu einer auf die Kraftmessvorrichtung (1) einwirkenden Umgebungstemperatur (Te) korrespondiert und Erzeugung eines der gemessenen Temperatur (Tm) entsprechenden elektrischen Temperaturmesssignals (mT);
   - Verarbeitung des Kraftmesssignals (mL) anhand des Temperaturmesssignals (mT) und des Kraftmesssignals (mL) zu einem temperaturkorrigierten Ausgabesignal (mLc);
   - Übertragung des Ausgabesignals (mLc) an eine Anzeigeeinheit (13) und/oder an eine weitere Verarbeitungseinheit (14),

   **dadurch gekennzeichnet, dass** bei dem Schritt der Verarbeitung aus dem Kraftmesssignal (mL) und dem Temperaturmesssignal (mT), mindestens ein der Korrektur des Ausgabesignals (mLc) dienender Korrekturparameter (CP) mittels eines thermodynamischen Modells berechnet wird, welcher eine Temperaturdifferenz (dTr, dT1, dT2) charakterisiert, die zwischen:

   - A) einer Systemtemperatur (Ts, Ts1, Ts2) und der gemessen Temperatur (Tm) und/oder
   - B) einer ersten Systemtemperatur (Ts1) und einer zweiten Systemtemperatur (Ts2)

   besteht, wobei die Systemtemperatur an beliebigen Orten und Bauteilen der Kraftmessvorrichtung berechnet werden kann.

2. Verfahren nach Anspruch 1, **dadurch gekennzeichnet, dass** der Korrekturparameter (CP) mittels einer Antwortfunktion (S(t), S1(t), S2(t)) und eines Faltungsintegrals berechnet wird, insbesondere indem das Temperaturmesssignal (mT), das Kraftmesssignal (mL) oder eine aus dem Kraftmesssignal (mL) ermittelte Verlustleistung (P) mit der zeitlichen Ableitung der Antwortfunktion (S(t), S1(t), S2(t)) gefaltet wird.

3. Verfahren nach Anspruch 2, **dadurch gekennzeichnet, dass** die Antwortfunktion (S(t), S1(t), S2(t)) gemäss mindestens einer thermodynamischen Gesetzmässigkeit und/oder als thermodynamische Reaktion einer eingehenden Schrittfunktion oder Impulsfunktion und/oder als eine zeitlich abfallende Funktion, insbesondere eine Exponentialfunktion mit einer vorgegebenen Zeitkonstante ($\tau$, $\tau_1$, $\tau_2$), definiert wird.

4. Verfahren nach einem der Ansprüche 1 bis 3, **dadurch gekennzeichnet, dass** der Korrekturparameter (CP) durch ein rekursives Berechnungsverfahren berechnet wird.

5. Verfahren nach einem der Ansprüche 1 bis 4, **dadurch gekennzeichnet, dass** der Korrekturparameter (CP) als zeitabhängige Grösse berechnet wird, welche vom Verlauf, insbesondere von der zeitlichen Änderung, der gemessenen Temperatur (Tm) und/oder des Kraftmesssignals (mL) abhängt.

6. Verfahren nach einem der Ansprüche 1 bis 5, **dadurch gekennzeichnet, dass** die Systemtemperatur (Ts, Ts1, Ts2) einer Temperatur eines Bauteils der Kraftmessvorrichtung (1), insbesondere einer Kraftzuführung, einer Kraftübertragung, eines Hebels (46) oder eines Hebelarms (48), entspricht und dass das Ausgabesignal (mLc) in Abhängigkeit von der Temperaturausdehnung dieses Bauteils korrigiert wird.

7. Verfahren nach einem der Ansprüche 1 bis 6, **dadurch gekennzeichnet, dass** der Korrekturparameter (CP) mindestens zwei der Temperaturdifferenzen (dT1, dT2) charakterisiert, welche jeweils verschiedenen Bauteilen der Kraftmessvorrichtung (1), insbesondere zwei entgegenwirkenden Hebelarmen (48a, 48b), zugeordnet sind.

8. Verfahren nach einem der Ansprüche 1 bis 7, **dadurch gekennzeichnet, dass** der Korrekturparameter (CP) mittels eines Differenzsignals ($\Delta$dT) berechnet wird, welches sich aus der Differenz zwischen zwei Temperaturdifferenzen (dT1, dT2) ergibt.

9. Verfahren nach einem der Ansprüche 1 bis 8, **dadurch gekennzeichnet, dass** die Kraftmessvorrichtung (1) auf dem Prinzip der elektromagnetischen Kraftkompensation basiert, und dass mit dem Korrekturparameter (CP) eine Temperaturdifferenz charakterisiert wird, welche mit der Erzeugung der Kompensationskraft zusammen hängt.

10. Verfahren nach Anspruch 9, **dadurch gekennzeichnet, dass** die Kompensationskraft mittels einer stromdurchflossenen Spule (53) unter Freisetzung einer Verlustleistung (P) erzeugt wird, und dass der Korrekturparameter (CP) in Abhängigkeit von dem Kraftmesssignal (mL), insbesondere einer davon abgeleiteten Verlustleistung (P), berechnet wird.

11. Verfahren nach Anspruch 9 oder 10, **dadurch gekennzeichnet, dass** die Kompensationskraft durch das Zusammenwirken einer Spule (53) und eines Permanentmagneten (50) erzeugt wird, und dass die Systemtemperatur (Ts) einer Temperatur der Spule (53) und/oder des Permanentmagneten (50) entspricht.

12. Verfahren nach einem der Ansprüche 1 bis 11, **dadurch gekennzeichnet, dass** mindestens zwei Korrekturen des Kraftmesssignals (mL) durch mindestens zwei verschiedene, im Wesentlichen getrennte Module berechnet werden, wobei durch jedes Modul jeweils mindestens ein Korrekturparameter (CP) berechnet wird.

13. Kraftmessvorrichtung (1), insbesondere eine Waage, mit einer Kraftmesszelle (10), welche ein elektrisches, zur einwirkenden Kraft korrespondierendes Kraftmesssignal (mL) erzeugt, mit einem in Distanz von den wärmeerzeugenden Bauteilen der Kraftmessvorrichtung (1) angeordneten Temperatursensor (15), welcher eine Temperatur (Tm) misst, die hauptsächlich zu einer auf die Kraftmessvorrichtung einwirkenden Umgebungstemperatur (Te) korrespondiert und ein zur gemessenen Temperatur (Tm) entsprechendes elektrisches Temperaturmesssignal (mT) erzeugt, und mit einer Signalverarbeitungseinheit (20), welche konfiguriert ist, um das Kraftmesssignal (mL) anhand des Temperaturmesssignals (mT) und des Kraftmesssignals (mL) zu einem temperaturkorrigierten, an eine Anzeigeeinheit (13) und/oder an eine weitere Verarbeitungseinheit (14) übertragbaren Ausgabesignal (mLc) zu verarbeiten, **dadurch gekennzeichnet, dass** die Signalverarbeitungseinheit (20) derart konfiguriert ist, dass ein im Messbetrieb der Kraftmessvorrichtung zur Korrektur des Ausgabesignals (mLc) dienender Korrekturparameter (CP) mittels eines zugrunde liegenden thermodynamischen Modells, vermittels dessen die Systemtemperatur an beliebigen Orten und Bauteilen der Kraftmessvorrichtung berechnet werden kann, berechenbar ist, wobei der Korrekturparameter aus der Aufsummierung von statischen und dynamischen Korrekturbeiträgen gebildet ist, welcher eine Temperaturdifferenz (dTr, dT1, dT2) charakterisiert, die zwischen:

- A) einer Systemtemperatur (Ts, Ts1, Ts2) und der gemessen Temperatur (Tm) und/oder
- B) einer ersten Systemtemperatur (Ts1) und einer zweiten Systemtemperatur (Ts2)

besteht.

14. Kraftmessvorrichtung (1) nach Anspruch 13, **dadurch gekennzeichnet, dass** der Temperatursensor (15) mit einem feststehenden, Bauteil (40, 41, 42, 43) der Kraftmessvorrichtung (1) in thermischem Kontakt steht.

**Claims**

1. Method for the temperature correction of a force-measuring device (1), specifically a balance, while operating in measurement mode, comprising the steps:

- by means of a force-measuring cell (10), generating an electrical force measurement signal (mL) corresponding to the input force;
- measuring a temperature (Tm) by means of a single temperature sensor (15) that is arranged at a distance from the heat-generating components of the force-measuring device (1), wherein said temperature (Tm) corresponds primarily to an ambient temperature (Te) to which the force-measuring device is exposed, and generating a temperature measurement signal (mT) corresponding to the measured temperature (Tm);
- processing the force measurement signal (mL) into a temperature-corrected output signal (mLc) based on the temperature measurement signal (mT) and the force measurement signal (mL); and
- transmitting the output signal (mLc) to an indicator unit (13) and/or to a further processing unit (14),
- **characterized in that** in the processing step at least one correction parameter (CP) serving for the correction of the output signal (mLc) is calculated from the force measurement signal (mL) and the temperature measurement signal (mL) by means of an underlying thermodynamic model wherein said correction parameter (CP) characterizes a temperature difference (dTr, dT1, dT2) which exists

A) between a system temperature (Ts, Ts1, Ts2) and the measured temperature (Tm) and/or
B) between a first system temperature (Ts1) and a second system temperature (Ts2),

wherein the system temperature can be calculated for any location and component of the force-measuring device.

2. Method according to claim 1, **characterized in that** the correction parameter (CP is calculated by means of a response function (S(t), S1(t), S2(t)) and a convolution integral, in particular by convoluting the temperature measurement signal (mT), the force measurement signal (mL), or an amount of dissipated power (P) determined from the force measurement signal (mL), with the time derivative of the response function (S(t), S1(t), S2(t)).

3. Method according to claim 2, **characterized in that** the response function (S(t), S1(t), S2(t)) is defined in accordance with at least one rule of thermodynamics and/or as a thermodynamic response to an input in the form of a step function or impulse function and/or as a time decay function, in particular an exponential function with a given time constant ($\tau$, $\tau_1$, $\tau_2$).

4. Method according to any one of claims 1 to 3, **characterized in that** the correction parameter (CP) is calculated through a recursive process.

5. Method according to any one of claims 1 to 4, **characterized in that** the correction parameter (CP) is calculated as a time-dependent quantity which depends on the time profile, in particular the rate of change, of the measured temperature (Tm) and/or the force measurement signal (mL).

6. Method according to any one of claims 1 to 5, **characterized in that** the system temperature (Ts, Ts1, Ts2) corresponds to a temperature of a component of the force-measuring device (1), in particular the temperature of a force input element, a force-transmitting element, a lever (46) or a lever arm (48), and that the output signal (mLc) is corrected with regard to the thermal expansion of said component.

7. Method according to any one of claims 1 to 6, **characterized in that** the correction parameter (CP) characterizes at least two of the temperature differences (dT1, dT2) that are associated, respectively, with different components of the force-measuring device (1), in particular two opposite lever arms (48a, 48b).

8. Method according to any one of claims 1 to 7, **characterized in that** the correction parameter (CP) is calculated by means of a difference signal ($\Delta$dT), which is obtained as the difference between two temperature differences (dT1, dT2).

9. Method according to any one of claims 1 to 8, **characterized in that** the force-measuring device (1) is based on the principle of electromagnetic force compensation, and that the correction parameter (CP) characterizes a temperature difference which occurs in connection with the process of generating the compensation electromagnetic force.

10. Method according to claim 9, **characterized in that** the compensation electromagnetic force is generated by means of a coil (53) in which a current is flowing, whereby an amount of power (P) is lost due to dissipation, and that the correction parameter (CP) is calculated as a function of the force measurement signal (mL), in particular as a function of a power dissipation loss (P) derived from the force measurement signal (mL).

11. Method according to claim 9 or 10, **characterized in that** the compensation electromagnetic force is generated by the mutual interaction of a coil (53) and a permanent magnet (50), and that the system temperature (Ts) corresponds to a temperature of the coil (53) and/or of the permanent magnet (50).

12. Method according to any one of claims 1 to 11, **characterized in that** at least two corrections of the force measurement signal (mL) are calculated through two different, essentially separate arithmetic modules, wherein each module performs, respectively, the calculation of at least one correction parameter (CP).

13. Force-measuring device (1), in particular a balance, with a force-measuring cell (10) generating an electrical force measurement signal (mL) corresponding to the applied force, with a temperature sensor (15) arranged at a distance from the heat-generating components of the force-measuring device (1), wherein said temperature sensor (15) measures a temperature (Tm) corresponding primarily to an ambient temperature (Te) acting on the force-measuring device and generates a temperature measurement signal (mT) corresponding to the measured temperature (Tm) which, in turn, corresponds primarily to an ambient temperature (Te) acting on the force-measuring device, and further with a signal-processing unit (20) that is configured to process the force measurement signal (mL) on the basis of the temperature measurement signal (mT) and of the force-measurement signal (mL) into a temperature-compensated output signal (mLc) which can be transmitted to an indicator unit (13) and/or to a further processing unit (14), **characterized in that** the signal-processing unit (20) is suitably configured so that, by means of an underlying thermodynamic model, a correction parameter (CP) can be calculated which serves for the correction of the output signal (mLc) when the force-measuring device operates in measurement mode, wherein the system temperature can be calculated for any location and component of the force-measuring device by means of the thermodynamic model, wherein the correction parameter (CP) is composed of a sum of static and dynamic correction amounts and characterizes a temperature difference (dTr, dT1, dT2) which exists

   A) between a system temperature (Ts, Ts1, Ts2) and the measured temperature (Tm) and/or
   B) between a first system temperature (Ts1) and a second system temperature (Ts2).

14. Force-measuring device (1) according to claim 13, **characterized in that** the temperature sensor (15) is in thermal contact with a stationary component (40, 41, 42, 43) of the force-measuring device (1).

## Revendications

1. Procédé destiné à corriger la température d'un dispositif de mesure de force (1) dans le mode mesure, en particulier d'une balance, comprenant les étapes suivantes :

   - génération d'un signal électrique de mesure de force (mL) correspondant à la force appliquée, au moyen d'une cellule de mesure de force (10) ;
   - mesure d'une température (Tm) au moyen d'un unique capteur de température (15) disposé à distance des composants générateurs de chaleur du dispositif de mesure de force (1), ladite température (Tm) correspondant principalement à une température ambiante (Te) agissant sur le dispositif de mesure de force (1), et génération d'un signal électrique de mesure de température (mT) correspondant à la température mesurée (Tm) ;
- transformation du signal de mesure de force (mL) à l'aide du signal de mesure de température (mT) et du signal de mesure de force (mL), en un signal de sortie corrigé en fonction de la température (mLc) ;
- transmission du signal de sortie (mLc) à une unité d'affichage (13) et/ou à une autre unité de traitement (14),

**caractérisé en ce que** dans l'étape de transformation à partir du signal de mesure de force (mL) et du signal de mesure de température (mT), au moins un paramètre de correction (CP) servant à corriger le signal de sortie (mLc) est calculé au moyen d'un modèle thermodynamique caractérisant une différence de température (dTr, dT1, dT2) existant entre :

- A) une température de système (Ts, Ts1, Ts2) et la température mesurée (Tm) et/ou
- B) une première température de système (Ts1) et une deuxième température de système (Ts2),

la température de système pouvant être calculée à des emplacements ou sur des composants au choix du dispositif de mesure de force.

2. Procédé selon la revendication 1, **caractérisé en ce que** le paramètre de correction (CP) est calculé au moyen d'une fonction de réponse (S(t), S1(t), S2(t)) et d'une intégrale de convolution, en particulier par convolution du signal de mesure de température (mT), le signal de mesure de force (mL) ou une puissance dissipée (P) déterminée à partir du signal de mesure de force (mL), avec la dérivée temporelle de la fonction de réponse (S(t), S1(t), S2(t)).

3. Procédé selon la revendication 2, **caractérisé en ce que** la fonction de réponse (S(t), S1(t), S2(t)) est définie selon au moins une loi thermodynamique et/ou en tant que réaction thermodynamique d'une fonction d'étape ou d'une fonction d'impulsion utilisée et/ou en tant que fonction diminuant avec le temps, en particulier une fonction exponentielle avec une constante de temps prédéfinie (T, T1, T2).

4. Procédé selon l'une des revendications 1 à 3, **caractérisé en ce que** le paramètre de correction (CP) est calculé à l'aide d'une méthode de calcul récursif.

5. Procédé selon l'une des revendications 1 à 4, **caractérisé en ce que** le paramètre de correction (CP) est calculé en tant que grandeur dépendante du temps, dépendant du déroulement, en particulier des modifications dans le temps, de la température mesurée (Tm) et/ou du signal de mesure de force (mL).

6. Procédé selon l'une des revendications 1 à 5, **caractérisé en ce que** la température de système (Ts, Ts1, Ts2) correspond à une température d'un composant du dispositif de mesure de force (1), en particulier à une alimentation de force, à une transmission de force, d'un levier (46) ou d'un bras de levier (48), et **en ce que** le signal de sortie (mLc) est corrigé en fonction de la dilatation thermique de ce composant.

7. Procédé selon l'une des revendications 1 à 6, **caractérisé en ce que** le paramètre de correction (CP) caractérise au moins deux des différences de température (dT1, dT2), lesquelles sont attribuées respectivement à différents composants du dispositif de mesure de force (1), en particulier à deux bras de leviers (48a, 48b) antagonistes.

8. Procédé selon l'une des revendications 1 à 7, **caractérisé en ce que** le paramètre de correction (CP) est calculé au moyen d'un signal de différence ($\Delta$dT) résultant de la différence entre deux différences de température (dT1, dT2).

9. Procédé selon l'une des revendications 1 à 8, **caractérisé en ce que** le dispositif de mesure de force (1) est basé sur le principe de la compensation de forces électromagnétique, et **en ce que** le paramètre de correction (CP) permet de caractériser une différence de température dépendante de la génération de la force de compensation.

10. Procédé selon la revendication 9, **caractérisé en ce que** la force de compensation est générée au moyen d'une bobine (53) traversée par un courant, avec libération d'une puissance dissipée (P), et **en ce que** le paramètre de correction (CP) est calculé en fonction du signal de mesure de force (mL), en particulier d'une puissance dissipée (P) dérivée de celui-ci.

11. Procédé selon la revendication 9 ou 10, **caractérisé en ce que** la force de compensation est générée par la coopération entre une bobine (53) et un aimant permanent (50), et **en ce que** la température de système (Ts, Ts1, Ts2) correspond à une température de la bobine (53) et/ou de l'aimant permanent (50).

**12.** Procédé selon l'une des revendications 1 à 11, **caractérisé en ce qu'**au moins deux corrections du signal de mesure de force (mL) sont calculées par au moins deux modules distincts essentiellement séparés, au moins un paramètre de correction (CP) étant respectivement calculé par chaque module.

**13.** Dispositif de mesure de force (1), en particulier une balance, avec une cellule de mesure de force (10), lequel génère un signal de mesure de force (mL) correspondant à la force appliquée, avec un capteur de température (15) disposé à distance des composants générateurs de chaleur du dispositif de mesure de force (1), mesurant une température (Tm) correspondant principalement à une température ambiante (Te) agissant sur le dispositif de mesure de force, et génère un signal électrique de mesure de température (mT) correspondant à la température mesurée (Tm), et avec une unité de traitement de signaux (20) configurée pour transformer le signal de mesure de force (mL) à l'aide du signal de mesure de température (mT) et du signal de mesure de force (mL), en un signal de sortie corrigé en fonction de la température (mLc) apte à être transmis à une unité d'affichage (13) et/ou à une autre unité de traitement (14), **caractérisé en ce que** l'unité de traitement de signaux (20) est configurée de manière à ce qu'un paramètre de correction (CP) servant à corriger le signal de sortie (mLc) dans le mode mesure du dispositif de mesure de force peut être calculé au moyen d'un modèle thermodynamique de base permettant de calculer la température de système à des emplacements ou sur des composants au choix du dispositif de mesure de force, le paramètre de correction étant formé par la somme d'éléments de correction statiques et dynamiques, et caractérisant une différence de température (dTr, dT1, dT2) existant entre :

- A) une température de système (Ts, Ts1, Ts2) et la température mesurée (Tm) et/ou
- B) une première température de système (Ts1) et une deuxième température de système (Ts2).

**14.** Dispositif de mesure de force (1) selon la revendication 13, **caractérisé en ce que** le capteur de température (15) est en contact thermique avec un composant fixe (40, 41, 42, 43) du dispositif de mesure de force (1).

**FIG. 1**

**FIG. 2**

FIG. 3

FIG. 4

**FIG. 5a**

**FIG. 5b**

**FIG. 5c**

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1495278 A
- DE 10353414 B3
- GB 2148512 A
- DE 29803425 U1
- CH 658516
- CH 669041